Europäisches Patentamt

(19) European Patent Office

Office européen des brevets

(11) EP 0 656 268 B1

## (12) EUROPEAN PATENT SPECIFICATION

(45) Date of publication and mention
of the grant of the patent:
**02.12.1998 Bulletin 1998/49**

(21) Application number: 93919664.8

(22) Date of filing: **14.09.1993**

(51) Int. Cl.$^6$: **B60C 23/06**

(86) International application number:
**PCT/JP93/01316**

(87) International publication number:
**WO 94/06641 (31.03.1994 Gazette 1994/08)**

(54) **APPARATUS FOR AND METHOD OF DETECTING DECREASE OF AIR PRESSURE IN TIRE**

GERÄT UND VERFAHREN ZUM DETEKTIEREN EINES DRUCKABFALLS IM REIFEN

APPAREIL ET PROCEDE CONCERNANT LA DETECTION D'UNE BAISSE DE PRESSION DANS UN PNEUMATIQUE

(84) Designated Contracting States:
**DE FR GB**

(30) Priority: **16.09.1992 JP 246848/92**
**16.09.1992 JP 246849/92**
**16.09.1992 JP 246850/92**
**16.09.1992 JP 246851/92**

(43) Date of publication of application:
**07.06.1995 Bulletin 1995/23**

(73) Proprietor:
**SUMITOMO ELECTRIC INDUSTRIES, LTD.**
**Osaka-shi, Osaka 541 (JP)**

(72) Inventors:
• **OKAWA, Yasushi,**
**Osaka Works of Sumitomo**
**Osaka-shiOsaka 554 (JP)**

• **ISSHIKI, Isao,**
**Osaka Works of Sumitomo**
**Osaka-shi, Osaka 554 (JP)**

(74) Representative:
**Rucker, Ernst, Dr. Dipl.-Chem. et al**
**Müller-Boré & Partner**
**Patentanwälte**
**Grafinger Strasse 2**
**81671 München (DE)**

(56) References cited:
**EP-A- 0 291 217        EP-A- 0 441 600**
**EP-A- 0 489 562        EP-A- 0 489 563**
**EP-A- 0 497 120        EP-A- 0 512 745**
**EP-A- 0 512 745        EP-A- 0 552 827**
**EP-A- 0 554 131        DE-A- 3 236 520**
**DE-A- 3 630 116        JP-A- 1 141 106**
**JP-A-50 015 203        JP-A-59 206 212**
**JP-A-63 305 011**

## Description

TECHNICAL FIELD

The present invention relates generally to detection of a tire pressure drop for a four-wheel vehicle, and more particularly, to a device for and a method of detecting a tire whose pneumatic pressure drops on the basis of the speeds of rotation of four tires.

BACKGROUND ART

As one of safety devices for a four-wheel vehicle such as an automobile or a truck, tire pressure drop detecting devices have been invented, and some of them have been put to practical use. There is a great request to detect a tire pressure drop for a vehicle particularly in Europe. The reason for this is that in European countries where expressways are developed, a tire pressure drop of a vehicle which is traveling at high speed is liable to cause a large accident.

Examples of the conventional tire pressure drop detecting devices which have been put to practical use include one for directly measuring tire pressures. In this conventional device, pressure sensors are respectively provided in tires, and the pneumatic pressures of the tires are directly measured by the pressure sensors. The measured tire pressures are applied to a processing device provided on the side of the body of a vehicle. The pressure sensors and the processing device are coupled to each other, for example, electromagnetically, thereby making it possible to mechanically send and receive signals in a non-contact state. The tire pressures processed by the processing device are displayed on a display or the like.

The device so constructed that pressure sensors are provided in the tires has the disadvantage of being very high in cost. In addition, it also has the disadvantage in that errors are liable to occur at the time of signal transmission, although signals are electromagnetically transmitted to the processing device provided on the side of the body of the vehicle from the pressure sensors provided in the tires. Particularly, the vehicle may, in some cases, travel under bad conditions, for example, on a road having a lot of earth magnetism, thus causing many barriers against electromagnetic signal transmission.

Therefore, as another conventional example, a tire pressure drop detecting method for detecting the rotational angular velocities of four tires and detecting a tire whose pneumatic pressure relatively drops on the basis of the rotational angular velocities of the respective tires has been proposed (see Japanese Patent Unexamined Publication No. 63-305011, for example).

In this conventional detecting method, the sum of the rotational angular velocities of a pair of tires on a diagonal line is subtracted from the sum of rotational angular velocities of the other pair of tires on another diagonal line, and a reduced pressure tire is detected if the result of the subtraction is in a range of 0.05 % to 0.6 % , preferably, in a range of 0.1 % to 0.3 % of the average value of the two sums.

However, the conventional method of detecting a reduced pressure tire on the basis of the rotational angular velocities of the tires has the following disadvantages. Specifically, in order to obtain an amount of the change in the rotational angular velocity of the reduced pressure tire, the average value of the rotational angular velocities of the four tires is taken as a reference amount, thus detecting the amount of the change in the rotational angular velocity of the reduced pressure tire on the basis of the reference amount. Therefore, the reference amount also includes the rotational angular velocity of the reduced pressure tire, so that the reference amount is not exact and the accuracy of the detection is not high.

Furthermore, the conventional detecting method also has the disadvantage in that the calculation of the rotational angular velocity for each of the tires which is the basis of the detection is not accurately conducted.

More specifically, in the conventional method, each of the tires is provided with a sensor for generating a signal having a frequency proportional to the rotational angular velocity of the tire to count the arising edges or the falling edges of an output signal of the sensor in a measuring period. Since the measuring period and the arising edges or the falling edges of the output signal of the sensor are not synchronized with each other, however, the timing of starting the measuring period and the timing of the arising edges or the falling edges of the output signal of the sensor vary for each measuring period. Therefore, the conventional method has the disadvantage in that an error occurs in the calculation of the rotational angular velocity.

Furthermore, as still another conventional example, a device for detecting a reduced pressure tire on the basis of a wheel speed signal, which is provided with a steering angle sensor and an acceleration sensor to inhibit the reduced pressure tire from being detected while a vehicle is cornering and is being accelerated or decelerated has been proposed (see Japanese Patent Unexamined Publication No. 63-64804).

In the conventional device, however, the steering angle sensor for detecting the steering angle of a handle is indispensable so as to prevent the erroneous detection of the reduced pressure tire in a case where the vehicle is cornering, and the gravity sensor for detecting the acceleration or the deceleration of the vehicle is required.

Therefore, the conventional device has the disadvantages of being complicated in construction and being high in cost.

The EP-A-0 441 600 discloses a method of detecting a partially deflated tyre on a vehicle. The method comprises sensing the angular velocity of each wheel. The time for one rotation is measured for every wheel, an average angular velocity value being obtained for each wheel on basis of at least three rotations of each wheel. The obtained data being processed in a processor unit which subtracts the sum of the signals from pair of diagonal opposite wheels from the sum of the other pair of diagonally opposite wheels. When the magnitude of the result lies within a predetermined range, a warning device is operated to indicate that a tyre is partially or completely deflated. The method may also compare the signal of each wheel in term to the average of all four to determine which wheel is deflated.

The present invention has been made so as to eliminate the disadvantages of the prior art and has for its object to provide a device and a method capable of accurately detecting the rotational angular velocities of tires and capable of detecting a tire pressure drop without erroneous detection on the basis of the accurate rotational angular velocities.

A more basic object of the present invention is as follows.

First, the object is related to the development of a run flat tire. The run flat tire is a tire so adapted as to roll over a distance of approximately 300 Km at a speed of not more than 80 Km/h even in a state where it went flat. In a vehicle on which such a run flat tire is mounted, even if the tire goes flat to cause the drop in the pneumatic pressure of the tire, a driver is often unaware of the drop in the pneumatic pressure. If the vehicle travels at a speed exceeding the speed limit or travels beyond the limit of the travel distance in a state where the tire went flat, the tire bursts, for example, which is liable to cause an accident. Therefore, one object is to detect the drop in the pneumatic pressure of such a run flat tire.

Another object of the present invention is to quickly detect, when a tire is slightly deflated, for example, deflated by a pressure of 0.5 atm, the deflation and inform a driver of the deflation to prevent an accident. Generally, even if the tire is deflated by a pressure of approximately 0.5 atm, a driver is often unaware of the deflation, so that a device capable of detecting the deflation has been desired.

Furthermore, another basic object is to satisfy, when a nail or the like is struck in a tire so that the pneumatic pressure of the tire drops slowly to some extent, for example, in not less than 20 to 30 seconds, a request to quickly detect the deflation.

As described in the foregoing, the present invention has been made on the basis of a basic position to detect a tire pressure drop to prevent an accident and has for its object to provide a low-cost and high-precision device and method for realizing the position.

This object is achieved by an apparatus having the features of claim 1 and by a method according to claim 17. Preferred embodiments are defined in the respective dependent claims.

In a vehicle having four tires, the apparent rolling radius of each of the tires calculated by dividing the distance at which the vehicle proceeds during one rotation of the tire at the time of traveling by $2\pi$ is referred to as a rolling radius. This rolling radius varies by the following factors:

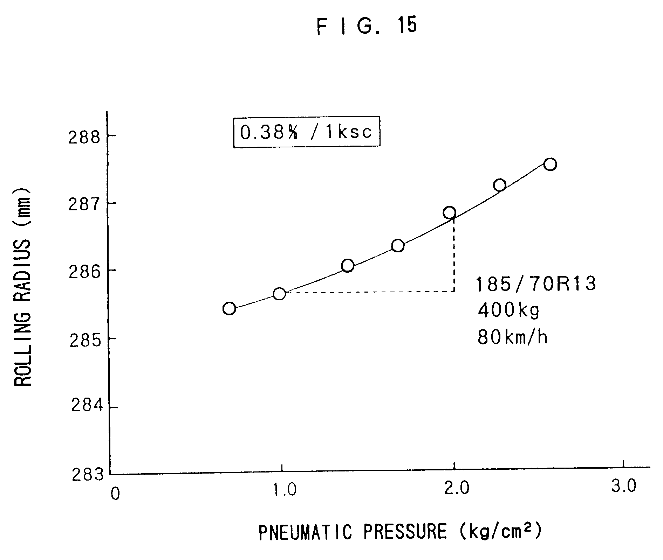

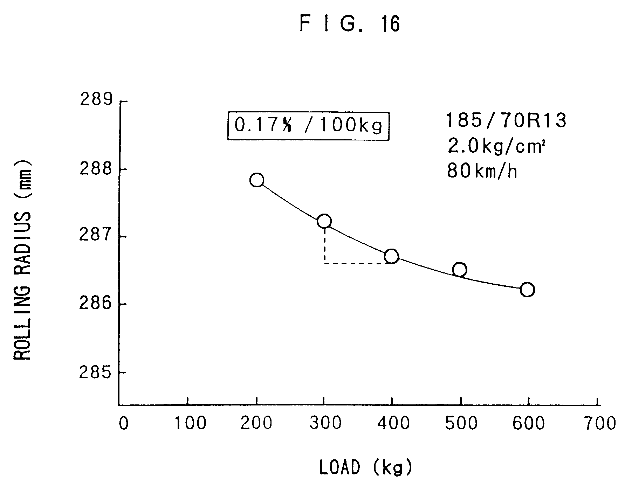

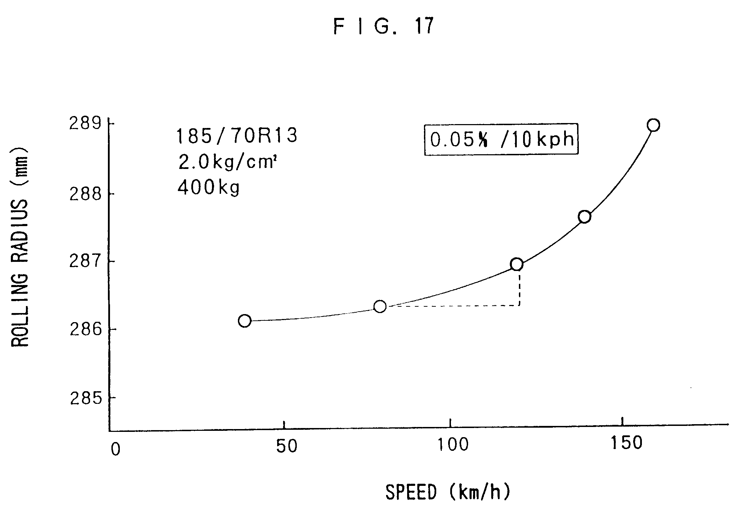

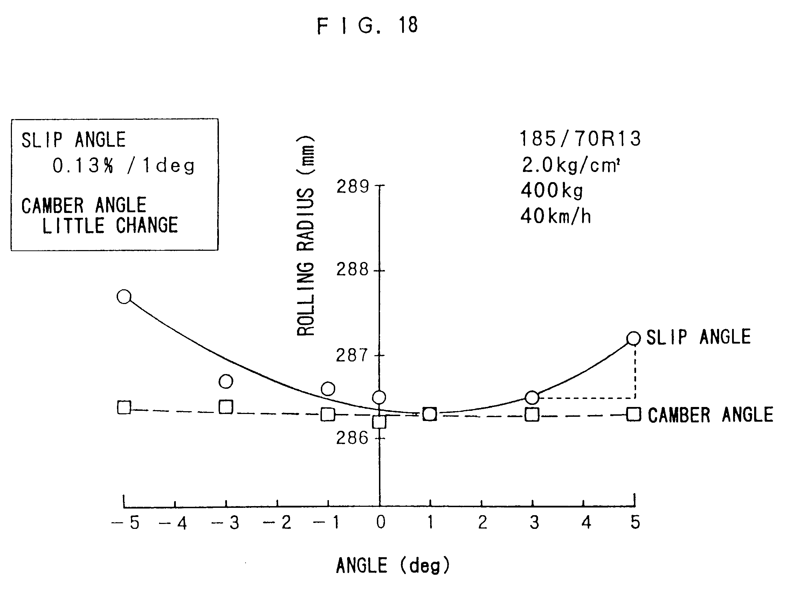

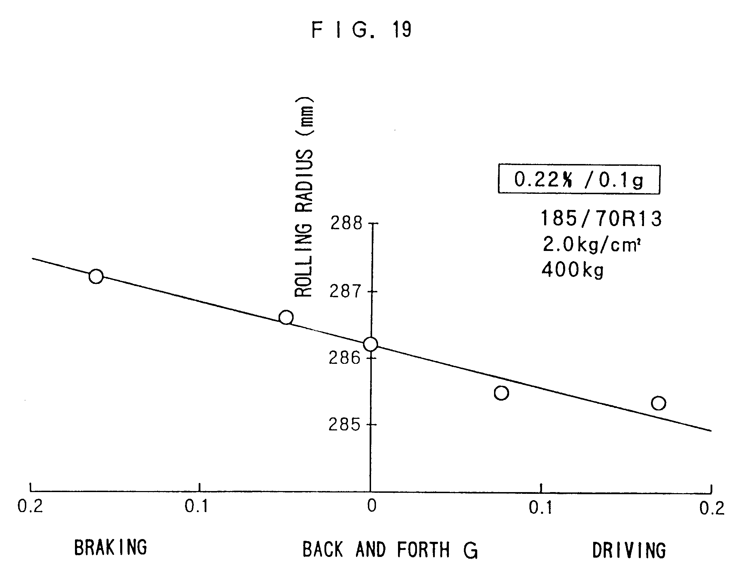

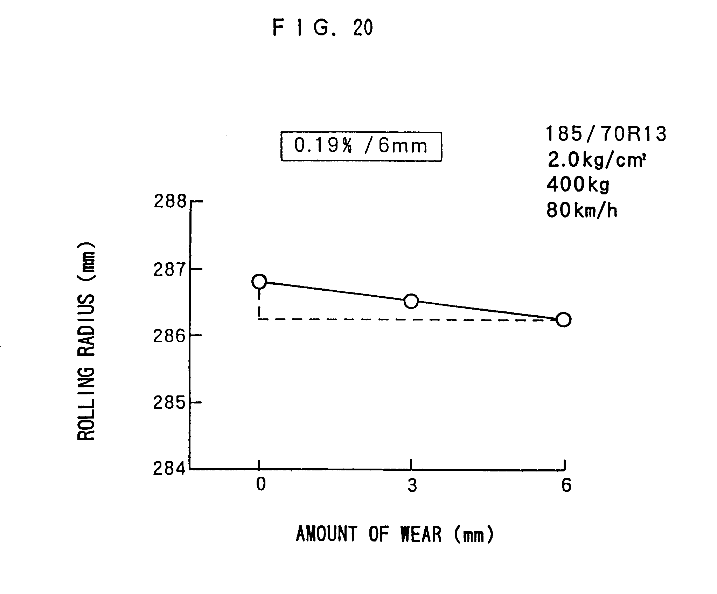

(1) the change in the pneumatic pressure of a tire (see Fig. 15),
(2) the change in the load on a tire (see Fig. 16),
(3) the change in the rotation speed of a tire, that is, the travel speed of a vehicle (see Fig. 17),
(4) the change in the slip angle of a tire (see Fig. 18),
(5) the change in the camber angle of a tire (see Fig. 18),
(6) a vehicle is being accelerated or braked (see Fig. 19),
(7) a vehicle is cornering, and
(8) the wear of a tire (see Fig. 20).

If the rolling radius of a certain tire is changed, the rotation speed of the tire whose rolling radius varies is changed with the rotation speed of the other tire in an arbitrary speed of the vehicle.

Therefore, the present invention is directed to detecting a tire whose pneumatic pressure drops on the basis of the following procedure:

a. detecting the change in the rotation speed of the tire,
b. excluding factors (the foregoing items (2) to (8)) other than the change in the pneumatic pressure of the tire which affect the change in the rolling radius of the tire, by suitably processing information on the rolling radius of the tire, and
c. consequently, extracting the relationship between the pneumatic pressure of the tire and the rolling radius thereof to detect the change in the pneumatic pressure of the tire.

Utilization of ABS:

Preferably, ABS (Antilock-Braking-System) already provided for a vehicle is effectively utilized.

The ABS is currently mounted at the spread rate of approximately 35 % of all vehicles in Europe, whereas in Japan that is 15 to 16 % . This ABS is a system having wheel speed sensors for detecting the rotational states of four tires for determining whether or not each of the tires is in a slipping state, thus controlling the hydraulic pressure of a brake.

A signal system of the ABS is for controlling the hydraulic pressure of the brake as described above in the direction in which the brake is not actuated. If a malfunction occurs, therefore, the vehicle enters a very dangerous state. Consequently, a signal system high in reliability has been employed. In a preferred embodiment of the present invention, signals of the wheel speed sensors obtained from the reliable signal system are utilized, thereby realizing a tire pressure drop detecting device high in reliability at low cost.

Preferably, when F1, F2, F3 and F4 are respectively taken as the rotational angular velocities of the four tires, a judged value dF given by the following equation (A) is found:

$$dF = (F1 + F4) / (F2 + F3) \tag{A}$$

The judged value dF is the ratio of the sum of the rotational angular velocities (F1 + F4) of a certain pair of tires on a diagonal line to the sum of the rotational angular velocities (F2 + F3) of another pair of tires. If the pneumatic pressures of the four tires are all normal, (F1 + F4) = (F2 + F3) , so that dF = 1. On the other hand, if the pneumatic pressure of any one of the tires drops, dF ≠ 1. Accordingly, it is judged that the pneumatic pressure of the tire drops by comparing the above described judged value dF with a predetermined value.

Accordingly, when the pneumatic pressure of any one of the four tires drops, the amount of the change in the rotational angular velocity of the tire whose pneumatic pressure drops is detected utilizing the rotational angular velocities of the three other normal tires as a reference amount. Therefore, the rotational angular velocity of the reduced pressure tire is not included in the reference amount for comparison, unlike the prior art. Consequently, the detecting precision is not varied or degraded, which allows the detection with high precision.

When the four-wheel vehicle is in a predetermined state being not suitable for detection of a tire pressure drop, it is preferable that an operation for detecting the tire pressure drop is inhibited. This prevents an erroneous operation, thereby making it possible to derive only correct results of the detection.

Furthermore, it is preferable that the detected rotational angular velocity of each of the tires is subjected to a suitable correction on the basis of the behavior of the four-wheel vehicle. Even when the four-wheel vehicle is being accelerated or decelerated so that the travel speed thereof is varying or even when the four-wheel vehicle is cornering, therefore, it is possible to operate the judged value dF on the basis of the accurate rotational angular velocity corrected. This enables to accurately detect the drop in the pneumatic pressure of the tire.

The rotational angular velocity of the tire is detected by, for example, giving each tire the construction for generating pulses proportional to the rotation of the tire and counting the generated pulses within a predetermined measuring period. In this case, it is preferable that the rotational angular velocity of the tire is calculated in accordance with the following procedure. More specifically, the time elapsed from the time when the last pulse within the preceding measuring period is generated to the time when the last pulse within the present measuring period is generated is calculated as the reference time of the present measuring period. The number of pulses applied within the present measuring period is divided by the calculated reference time, thus finding the number of pulses per unit time. The rotational angular velocity of the tire is calculated on the basis of the number of pulses per unit time.

The measuring period and the period of the pulses are not synchronized with each other. However, the number of pulses per unit time is found on the basis of the time elapsed from the time when the last pulse within the preceding measuring period is applied to the time when the last pulse within the present measuring period is applied. Therefore, the number of pulses per unit time can be accurately calculated, which allows to accurately find the rotational angular velocity of each of the tires.

When the pneumatic pressure of any one of the tires drops, it is possible to accurately detect the drop on the basis of the rotational angular velocity thus found for each of the tires.

BRIEF DESCRIPTION OF THE DRAWINGS

Fig. 1 is a diagram schematically showing the outline of a vehicle equipped with a tire pressure drop detecting device (DWS) according to one embodiment of the present invention and a conventionally known ABS.

Fig. 2 is a perspective view showing one example of a mounting structure of a wheel speed sensor.

Fig. 3 is an illustration for explaining the principle of detecting the rotation by the wheel speed sensor.

Fig. 4 is a block diagram showing the electrical construction of a DWS according to one embodiment of the present invention.

Fig. 5 is a circuit block diagram showing the electrical construction of a DWS according to another embodiment of the present invention.

Fig. 6 is a block diagram showing an example of the circuit arrangement of a DWS according to still another embodiment of the present invention.

Figs. 7 (a), 7 (b) and 7 (c) are diagrams showing the relationship between wheel speed pulses inputted to a CPU 24 and the measuring period.

Figs. 8 (a) and 8 (b) are flow charts showing the procedure for calculation processing of the rotational angular velocity of a tire.

Fig. 9 is a timing chart for explaining another processing method of calculation processing of the rotational angular velocity of a tire.

Fig. 10 is a flow chart showing the procedure for performing the calculation of the rotational angular velocity as described in Fig. 9.

Fig. 11 is a diagram showing the arrangement of tires of a four-wheel vehicle.

Fig. 12 is an illustration for explaining a force exerted on each of tires in a case where lateral acceleration G is exerted on the vehicle.

Fig. 13 is a flow chart showing an initialization processing required before judgment processing of a reduced pressure tire.

Fig. 14 is a flow chart showing the judgment processing of a reduced pressure tire.

Fig. 15 is a graph showing the effect of the pneumatic pressure on the rolling radius of a tire.

Fig. 16 is a graph showing the effect of the load on the rolling radius of a tire.

Fig. 17 is a graph showing the effect of the speed on the rolling radius of a tire.

Fig. 18 is a diagram showing the effect of the slip angle and the camber angle on the rolling radius of a tire.

Fig. 19 is a graph showing the effect of driving or braking of a vehicle on the rolling radius of a tire.

Fig. 20 is a graph showing the relationship between the rolling radius of a tire and the wear of the tire.

## BEST MODE FOR CARRYING OUT THE INVENTION

Embodiments of the present invention will be described in detail with reference to the attached drawings.

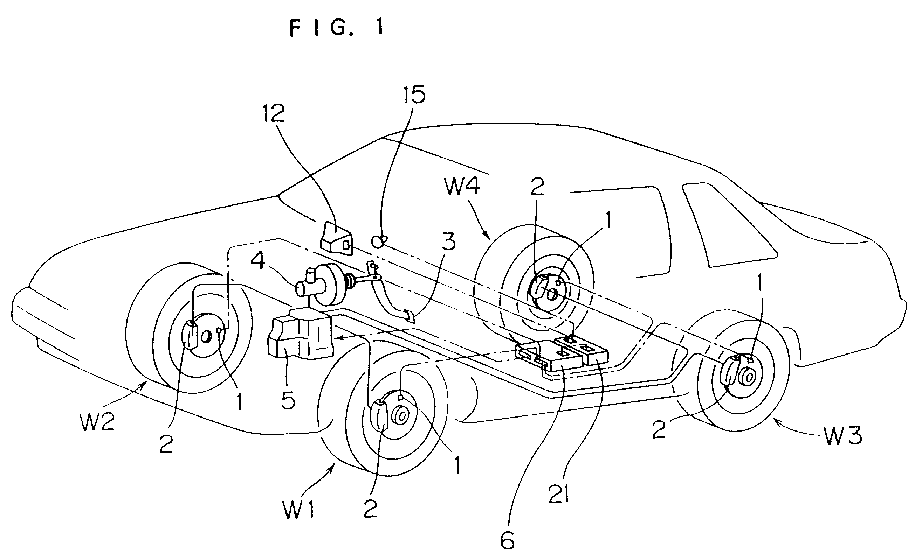

Fig. 1 is a diagram showing the outline of a vehicle equipped with a tire pressure drop detecting device (hereinafter referred to as "DWS") according to one embodiment of the present invention and a conventionally known ABS.

The ABS is a device for electronically controlling, on the basis of outputs of wheel speed sensors 1 respectively provided in relation to four tires W1, W2, W3 and W4, the brake pressure of a brake 2 of each of wheels, thus avoiding a locked state of the wheel at the time of, for example, a rapid braking operation. Specifically, if a brake pedal 3 is strongly depressed, the hydraulic pressure from a master cylinder 4 is controlled by a hydraulic pressure unit 5 and is transmitted to the brake 2 of each of the wheels. A control unit for ABS 6 for monitoring the outputs of the four wheel speed sensors 1 is connected to the hydraulic pressure unit 5. In the control unit for ABS 6, if a so-called locked state of any one of the wheels is judged on the basis of the output of each of the wheel speed sensors 1, the hydraulic pressure unit 5 is controlled to reduce the brake pressure of the brake 2 of the wheel in the locked state.

In the ABS, an analog signal applied from each of the wheel speed sensors 1 is first subjected to binarizating processing in the control unit for ABS 6. A wheel speed signal obtained by the binarizating processing (hereinafter referred to as "wheel speed pulses") is used for the processing.

On the other hand, the DWS according to the embodiment comprises a control unit for DWS 21, a display 12 connected to the control unit for DWS 21, and an initialization switch 15 connected to the control unit for DWS 21 and operated by a driver. The control unit for DWS 21 receives the wheel speed pulses from the control unit for ABS 6 to detect the drop in each of the pneumatic pressures of the tires W1 to W4 on the basis of the wheel speed pulses. If the drop in the pneumatic pressure of any one of the tires W1 to W4 is detected, the result is displayed on the display 12. On the display 12, a tire whose pneumatic pressure drops is displayed, as described later.

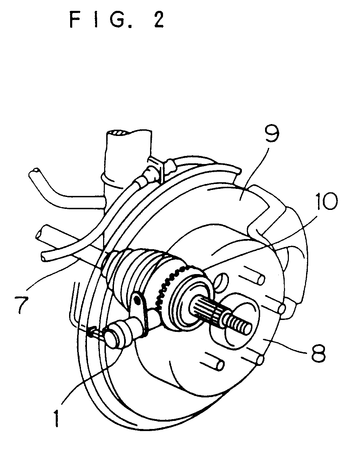

Fig. 2 is a perspective view showing one example of a mounting structure of the wheel speed sensor 1 described in Fig. 1. A wheel mounting member 8 and a brake disk 9 are fastened on an end of a wheel shaft 7. A sensor rotor 10 rotated integrally with the wheel shaft 7 is mounted on the inside of the brake disk 9. A plurality of teeth are projected at a predetermined pitch on the entire peripheral surface of the sensor rotor 10. The wheel speed sensor 1 is mounted on the peripheral surface of the sensor rotor 10 so as to be opposed to each other with predetermined spacing and in a fixed state where it is not rotated.

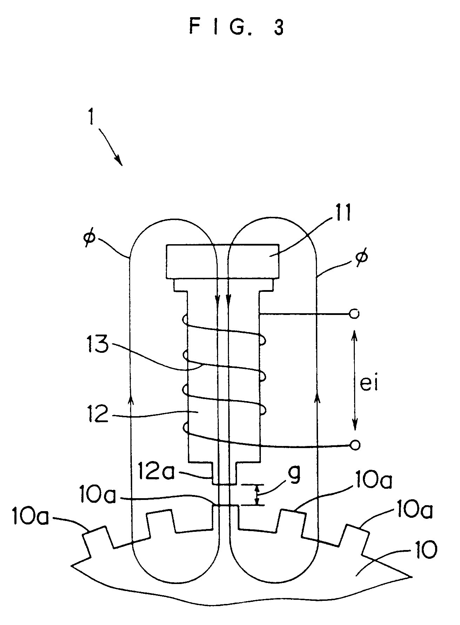

Fig. 3 is an illustration for explaining the principle of detecting the rotation by the wheel speed sensor 1. The wheel speed sensor 1 introduces a magnetic flux $\phi$ formed by a permanent magnet 11 to the sensor rotor 10 by a pole piece 12 and takes out an electromotive force $e_i$ produced in both ends of a coil 13 wound around the pole piece 12. A gap g is formed between an end 12a of the pole piece 12 and the sensor rotor 10. The sensor rotor 10 is fixed to the wheel shaft 7 as described above, and is rotated with the rotation of the wheel shaft 7, that is, the rotation of the tire. In addition, a lot of teeth 10a are projected at a predetermined pitch, as described above, on the peripheral surface of the sensor rotor 10. Accordingly, the gap g between the end 12a of the pole piece 12 and the peripheral surface of the sensor rotor 10 changes as the sensor rotor 10 rotates. Since the magnetic flux φ penetrating the pole piece 12 varies with the change of the gap g, an electromotive force $e_i$ corresponding to the change in the magnetic flux φ produces in both ends of the coil 13. The electromotive force $e_i$ varies with a frequency corresponding to the rotation of the sensor rotor 10, thus finally obtaining a voltage signal $e_i$ having a frequency corresponding to the rotation speed of the tire.

In the embodiment, the number of teeth 10a projected on the peripheral surface of the sensor rotor 10 is, for example, about 45. If the sensor rotor 10 is rotated once, therefore, the 45 teeth 10a are opposed to the end 12a of the pole piece 12. Accordingly, if the sensor rotor 10 is rotated once, that is, the tire is rotated once, 45 AC signals are produced in both ends of the coil 13.

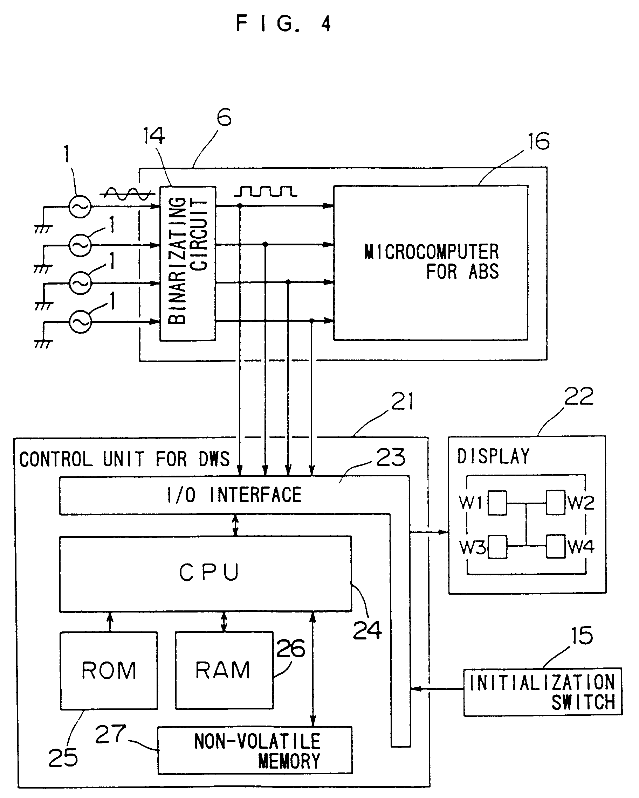

Fig. 4 is a block diagram showing the electrical construction of the DWS according to one embodiment of the present invention. As described in Fig. 1, the detection signals of the four wheel speed sensors 1 are applied to the control unit for ABS 6. The control unit for ABS 6 comprises a binarizating circuit 14 and a microcomputer for ABS 16. The detection signals of the wheel speed sensors 1 applied to the control unit for ABS 6 are first binarized in the binarizating circuit 14 and then, are supplied to the microcomputer for ABS 16.

The DWS according to the embodiment is so adapted as to receive the detection signals of the wheel speed sensors 1 in the ABS, as described above. In this case, the detection signal of each of the wheel speed sensors 1 is not directly applied to the control unit for DWS 21. Specifically, wheel speed pulses obtained after the detection signal is binarized in the binarizating circuit 14 in the control unit for ABS 6 are applied to the control unit for DWS 21.

Such connecting arrangement has two great advantages.

One advantage is that if a failure should occur in a portion, to which the wheel speed signal is inputted, of the control unit for DWS 21, it is possible to prevent the failure from exerting a fatal effect on the control unit for ABS 6. Consider a case where the control unit for DWS 21 is so constructed as to directly accept outputs of the wheel speed sensors 1, that is, signal lines of the wheel speed sensors 1 are respectively branched and connected to the control unit for DWS 21. In this case, if any one of the branched signal lines attains, for example, a ground level, an erroneous wheel speed detection signal is applied to the binarizating circuit 14 in the control unit for ABS 6. As a result, a malfunction may occur in the microcomputer for ABS 16. On the contrary, in the embodiment, the wheel speed pulses obtained after the detection signal is binarized by the binarizating circuit 14 in the control unit for ABS 6 are applied to the control unit for DWS 21. In this case, even if a failure occurs in the portion, to which the wheel speed signal is inputted, of the control unit for DWS 21, the failure does not exert a fatal effect on the control unit for ABS 6.

Another advantage is that the wheel speed pulses obtained by the binarizating processing are applied to the control unit for DWS 21, and it is therefore possible to simplify the portion, to which the wheel speed signal is inputted, of the control unit for DWS 21.

The DWS according to the embodiment comprises the control unit for DWS 21 to which the wheel speed pulses are applied, a display 22, and an initialization switch 15. The control unit for DWS 21 is constituted by a microcomputer, and its hardware configuration comprises an input-output interface 23 required to send and receive signals to and from an external device, a CPU 24 serving as the center of operation processing, a ROM 25 storing a control operation program of the CPU 24, a RAM 26 to which data or the like is temporarily written or from which the written data is read out when the CPU 24 performs a control operation, and a non-volatile memory 27 capable of holding stored data even when the power supply is turned off, as shown in Fig. 4. The RAM 26 comprises a time memory area, a measuring timer area, a pulse counter area, a work register area, and the like, as described later. In addition, data rejecting conditions, data correction factors and the like, as described later, are stored in the non-volatile memory 27.

If in the control unit for DWS 21, a tire whose pneumatic pressure drops is detected on the basis of the wheel speed pulses applied from the binarizating circuit 14, the result of the detection is outputted to the display 22 and is displayed thereon. The display 22 comprises display elements corresponding to the four tires W1, W2, W3 and W4, as shown in Fig. 4. If the tire whose pneumatic pressure drops is detected, the display element corresponding to the tire lights up or flickers. The display element may be constituted by an indicator lamp.

Furthermore, it is preferable that all the indicator lamps or the display elements W1 to W4 light up for a predetermined time period after an ignition switch of the vehicle is turned on so as to inform a driver that no failure occurs in the indicator lamps or the display elements.

The function of the initialization switch 15 shown in Fig. 4 will be described later.

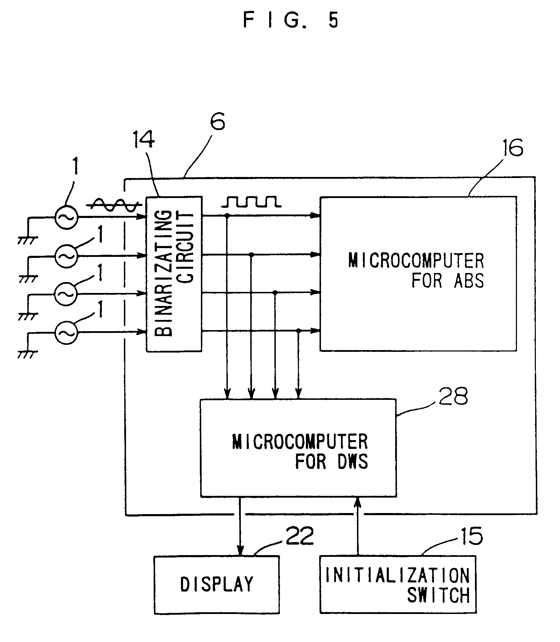

Fig. 5 is a circuit block diagram showing the electrical construction of a DWS according to another embodiment of the present invention. The construction shown in Fig. 5 differs from the construction shown in Fig. 4 in that a microcomputer for DWS 28 is added to the inside of a control unit for ABS 6. Adding the microcomputer for DWS 28 to the inside of another unit, i.e., the control unit for ABS 6 in the embodiment, enables to effectively use the existing control unit. This does not increase the number of control units, thus reducing the circuit arrangement as well as cost.

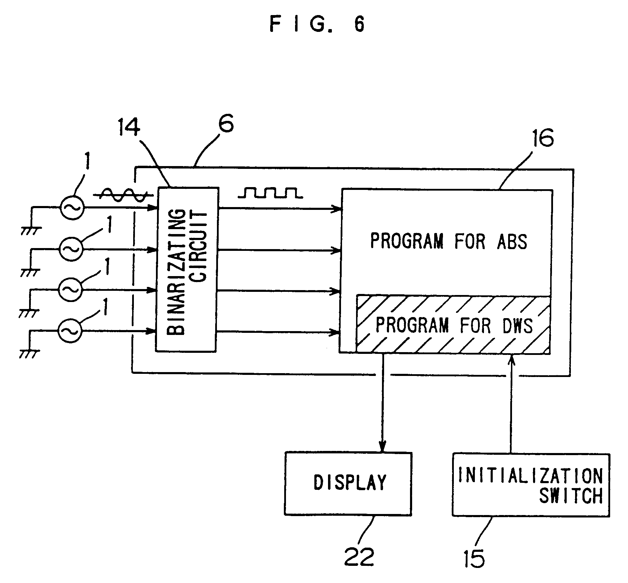

In place of the construction shown in Fig. 5 in which the microcomputer for DWS 28 is added to the inside of the control unit for ABS 6, a program for detecting a tire pressure drop may be added, as shown in Fig. 6, in addition to a program for ABS to the inside of a microcomputer for ABS 16. This allows the hardware configuration of the microcomputer to constitute a DWS only by adding a new program while utilizing the existing microcomputer for ABS 16 without any modification.

Description is now made as to how the wheel speed pulses applied are read by the CPU 24 in the control unit for DWS 21 described in Fig. 4.

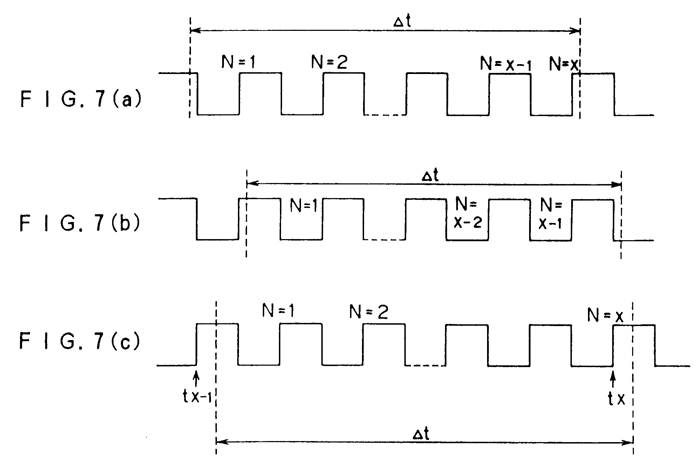

The wheel speed pulses inputted to the CPU 24 shown in Fig. 4 are respectively pulse signals as shown in Fig. 7. The CPU 24 counts the applied wheel speed pulses for each predetermined measuring period $\Delta t$, to calculate the rotational angular velocity of each of tires W1 to W4 (see Fig. 1).

Meanwhile, the period of the wheel speed pulses inputted to the CPU 24 and the measuring period $\Delta t$ in the CPU 24 are asynchronous. Therefore, the period of the wheel speed pulses and the measuring period $\Delta t$ may, in some cases, be in the relationship as shown in Fig. 7 (a), or as shown in Fig. 7 (b) in the other cases. Specifically, in the cases as shown in Fig. 7 (a), the number N of arising edges of the wheel speed pulses within the measuring period $\Delta t$ is x. On the other hand, in the cases as shown in Fig. 7 (b), the number N of arising edges of the wheel speed pulses within the measuring period $\Delta t$ is (x - 1). If the relationships between the timing of starting and that of terminating the measuring period $\Delta t$ and the arising edges of the wheel speed pulses thus differ, an error of $\pm 1$ may, in some cases, occur in the number of wheel speed pulses counted within the same measuring period $\Delta t$. Particularly while the vehicle is traveling at low speed, the number of wheel speed pulses is small, so that the error rate is increased.

In the embodiment, therefore, the time when the last arising edge within each of the measuring periods $\Delta t$ is detected, for example, $t_{x-1}$ or $t_x$ is stored, as shown in Fig. 7 (c). The rotational angular velocity $\omega$ of a tire is found by the following equation letting the number of arising edges of wheel speed pulses counted within a certain measuring period $\Delta t$ be x:

$$\omega = (k1 \cdot x) / (t_x - t_{x-1}) \tag{1}$$

where k1 : a constant

As a result, there occurs no error based on the fact that the period of the wheel speed pulses and the measuring period $\Delta t$ are asynchronous. This enables to accurately count the wheel speed pulses. It is therefore possible to calculate the rotational angular velocity of each of tires without errors.

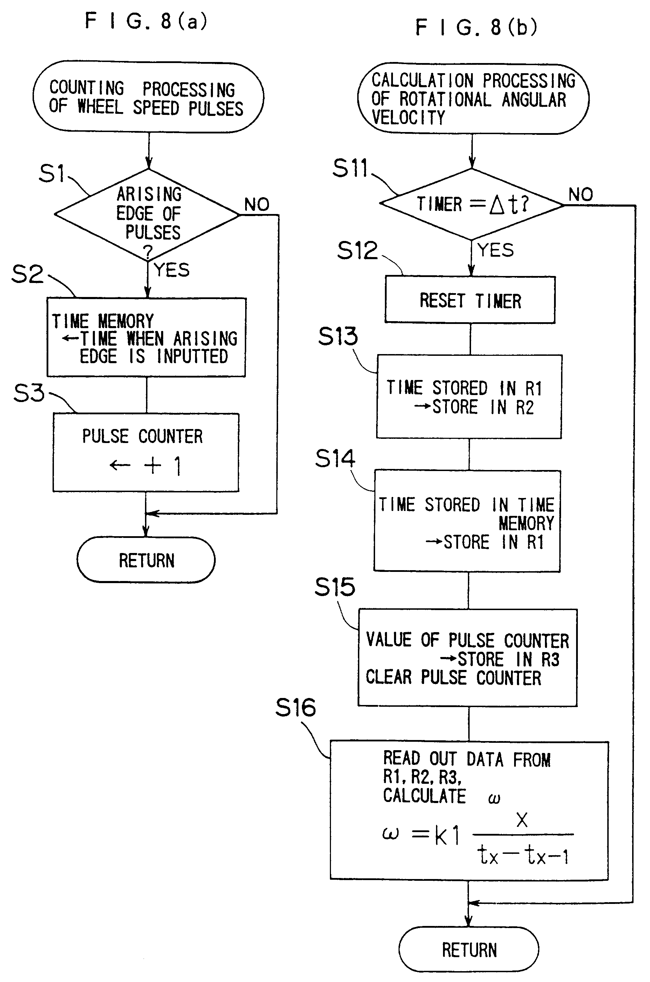

Figs. 8 (a) and 8 (b) are flow charts showing the procedure for calculation processing of the rotational angular velocity of a tire in the CPU 24 (see Fig. 4). Referring now to Fig. 8, a method of calculating the rotational angular velocity of a tire will be described more concretely.

In the CPU 24, counting processing of the wheel speed pulses applied is performed. This processing is performed in accordance with the flow chart of Fig. 8 (a). Specifically, if it is judged that a arising edge of the wheel speed pulses is inputted (step S1), the time when the arising edge is inputted is stored in a time memory (this time memory uses a storage area in the RAM 26 shown in Fig. 4) (step S2). The count value of a pulse counter (this pulse counter is also formed using a storage area in the RAM 26) is incremented by one.

The foregoing processing is repeated.

On the other hand, the calculation processing of the rotational angular velocity of a tire is performed in accordance with the flow chart of Fig. 8 (b).

Specifically, it is judged whether or not the time measured by a measuring timer for measuring a measuring period $\Delta t$ (this measuring timer is also formed using a storage area in the RAM 26, for example) reaches $\Delta t$ (step S11). If it is judged that the measuring timer reaches the measuring period $\Delta t$ ($\Delta t$ can be set to, for example, several seconds below the decimal to several seconds), the measuring timer is reset (step S12). Consequently, the measuring timer starts to measure time from zero again. Further, in the preceding measuring period being stored in a work register R1 formed in a storage area of the RAM 26, the time $t_{x-1}$ when the last arising edge of the wheel speed pulses is detected is stored in another work register R2 (step S13). The time $t_x$ stored in the time memory (the time stored in the step S2) is stored in the work register R1 (step S14). As a result, the time $t_{x-1}$ when the last arising edge of the wheel speed pulses in the preceding measuring period is detected is stored in the work register R2, and the time $t_x$ when the last arising edge of the wheel speed pulses in the present measuring period is detected is stored in the work register R1.

The value of the pulse counter is then stored in still another work register R3. The pulse counter is then cleared (step S15).

The data stored in the three work registers R1, R2 and R3 are read out to calculate the rotational angular velocity $\omega$ of the tire (step S16). This calculation is made on the basis of the foregoing equation (1).

Accordingly, the rotational angular velocity of the tire for each measuring period $\Delta t$ can be accurately calculated without errors.

In the above case, the falling edge of the wheel speed pulses may be detected in place of the arising edge thereof.

The counting processing of the wheel speed pulses and the calculation processing of the rotational angular velocity of the tire in the foregoing are respectively performed for each wheel speed sensor because there are provided four wheel speed sensors 1.

The following calculation processing may be performed in place of the calculation processing of the rotational angular velocity of the tire.

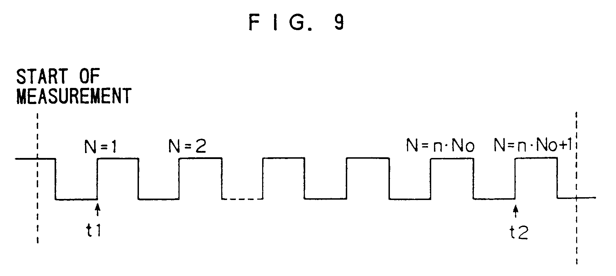

Specifically, referring to Fig. 9, the time t1 when the first arising edge (or the first falling edge) of the wheel speed pulses is detected after the measurement is started is stored. In addition, the time t2 when integral multiples (n = 1, 2, 3 ...) of the number N0 of arising edges (or falling edges) of the wheel speed pulses per one rotation of the tire plus the first leading (or trailing) edge of the wheel speed pulses is stored. The rotational angular velocity $\omega$ of the tire is calculated by the following equation (2):

$$\omega = (k2 \cdot n) / (t2 - t1) \tag{2}$$

where k2 :    a constant

Consider a case where such a method of calculating the rotational angular velocity is used. In this case, even if a pitch at which the teeth 10a are projected in the sensor rotor 10 (see Fig. 3) varies, no error occurs in the rotational angular velocity $\omega$ due to the variation. Therefore, it is possible to calculate the rotational angular velocity more accurately.

Also in the case of calculating the rotational angular velocity, the wheel speed pulses from the four wheel speed sensors 1 are respectively detected, to calculate the rotational angular velocities with respect to the respective tires W1 to W4.

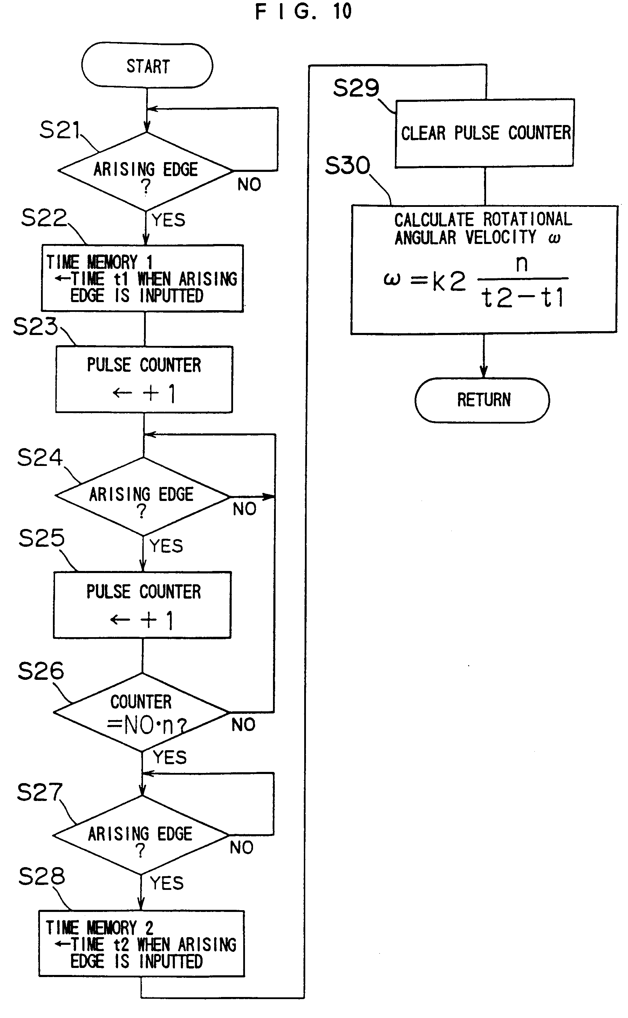

Fig. 10 is a flow chart showing the procedure for processing in the CPU 24 in calculating the rotational angular velocity described with reference to Fig. 9.

Referring now to Fig. 10, a method of calculating the rotational angular velocity will be described more concretely. If the measurement of the wheel speed pulses is started, arising edges, for example, of the wheel speed pulses are detected (step S21). If the first arising edge is detected, the time t1 when the first arising edge is detected is stored in the time memory 1 (step 22). In addition, the count value of the pulse counter is set to "1" (step S23).

Thereafter, it is judged whether or not the succeeding arising edge of the wheel speed pulses is detected (step 24), and the pulse counter is incremented by one every time the arising edge is detected (step S25).

It is judged whether or not the count value of the pulse counter reaches integral multiples (n = 1, 2, 3, ...) of a predetermined number N0 of arising edges of the wheel speed pulses per one rotation of the tire (step S26). The processing in the steps 24 and 25 is repeated until the value of the pulse counter reaches N0 x n.

If it is judged that the count value of the pulse counter reaches N0 x n and the succeeding arising edge of the wheel speed pulses is detected (YES in steps S26 and 27), the time t2 when the last arising edge of the wheel speed pulses detected in the step S24 is detected is stored in the time memory 2 (step S28).

The pulse counter is cleared in preparation for the start of the subsequent measurement (step S29), and the rotational angular velocity $\omega$ of the tire is calculated by the foregoing equation (2) using the time stored in the time memory 1 and the time stored in the time memory 2 (step S30).

The time memory 1 and the time memory 2 described in Fig. 10 are formed using storage areas in the RAM 26 shown in Fig. 4.

It is preferable that the detection processing of the rotational angular velocity $\omega$ described with reference to Fig. 8 or Fig. 10 is so performed that the rotational angular velocities of the four tires are simultaneously calculated in a parallel manner on the basis of the respective wheel speed pulses from the four wheel speed sensors 1. The reason for this is that the drop in the pneumatic pressure of the tire can be detected more accurately if the rotational angular velocities of the tires are that which simultaneously detected because the tire whose pneumatic pressure relatively drops is detected on the basis of the rotational angular velocities of the tires.

Description is now made of a method of detecting a tire pressure drop.

In a diagram showing the arrangement of four tires of a four-wheel vehicle shown in Fig. 11, F1, F2, F3 and F4 are respectively taken as the rotational angular velocity of a left front tire W1, that of a right front tire W2, that of a left rear tire W3, and that of a right rear tire W4. At this time, the ratio dF of the sum of the rotational angular velocities (F1 + F4) of the pair of tires W1 and W4 on a diagonal line and the sum of the rotational angular velocities (F2 + F3) of the other pair of tires W2 and W3 on another diagonal line is found as a judged value, thus obtaining the following judging equation (3) for detecting a tire pressure drop:

$$dF = (F1 + F4) / (F2 + F3) \tag{3}$$

If all the pneumatic pressures of the four tires W1 to W4 are normal, F1 to F4 are all equal to each other, so that dF = 1.

On the other hand, if the pneumatic pressure of any one of the tires drops, $dF \neq 1$. When holding the following expression, it is detectable that the pneumatic pressure of any one of the tires drops:

$$dF > (1 + a_1), \text{ or } dF < (1 - a_2)$$

where $a_1$ and $a_2$ :  constants

If the judging equation (3) is used, the rotational angular velocity of a reduced pressure tire out of the four tires can be detected as the amount of the change relative to the other three tires whose pneumatic pressures are normal. As described in the prior art, therefore, the reference amount for comparison does not include the rotational angular velocity of the reduced pressure tire, so that the detecting accuracy is not varied or degraded. This allows to conduct the detection with high precision.

If the judging equation (3) according to the embodiment is used, it is possible to correctly detect the drop in the pneumatic pressure of any one of the four tires W1 to W4 or the drop in the pneumatic pressures of the two tires W1 and W4 or W2 and W3 on the diagonal line.

Description is now made of a method of specifying a tire whose pneumatic pressure drops out of the four tires W1 to W4 after detecting a tire pressure drop.

In the foregoing judging equation (3), it is possible to prescribe that:

the reduced pressure tire is W1 or W4 if $dF > 1$, and
the reduced pressure tire is W2 or W3 if $dF < 1$.

Furthermore, in the above case, if the vehicle is linearly traveling, it is possible to prescribe that:

the reduced pressure tire is W1 if F1 > F2,
the reduced pressure tire is W2 if F1 < F2,
the reduced pressure tire is W3 if F3 > F4, and
the reduced pressure tire is W4 if F3 < F4.

When the pneumatic pressures of the two tires which are not on the diagonal line, for example, the two front tires W1 and W2 or the two rear tires W3 and W4 simultaneously drop, the drop in the pneumatic pressures of the tires cannot, in some cases, be detected using the judging equation (3).

Under the conditions that the vehicle travels at approximately constant speed and substantially linearly after detecting a tire pressure drop using the judging equation (3), it is therefore preferable to compare the sum of the rotational angular velocities (F1 + F2) of the front tires W1 and W2 and the sum of the rotational angular velocities (F3 + F4) of the rear tires W3 and W4, and then if the sums are not equal, it is determined that the tires wherein the sum is larger have a drop in pneumatic pressures. That is, it is preferable to judge that:

the pneumatic pressures of the tires W1 and W2 drop if $(F1 + F2) / (F3 + F4) > C_0$ ($C_0$ : a constant determined by the vehicle), and
the pneumatic pressures of the tires W3 and W4 drop if $(F1 + F2) / (F3 + F4) < C_0$ ($C_0$ : a constant determined by the vehicle).

Judgment as to whether or not the vehicle is traveling at constant speed may be made in the following manner. Specifically, if the rate of change in the average value of the rotational angular velocities of the four tires obtained from the four-wheel speed sensors is within a certain specified value, it can be judged that the vehicle is traveling at constant speed. On the other hand, if the rate of change is outside the certain specified value, for example, the rate of change rises above the specified value, it can be judged that the vehicle is being accelerated. Conversely, if the rate of change is lowered below the certain specified value, it can be judged that the vehicle is being decelerated. In the foregoing, on the basis of the outputs of the wheel speed sensors it is judged whether or not the vehicle is traveling at constant speed. It is therefore no necessity to provide an acceleration sensor or the like in the DWS, thus simplifying the construction of the DWS.

The detection of a tire pressure drop using the judging equation (3) is, as mentioned above, based on the ground that if the rolling radius of the tire varies, the rotational angular velocity of the tire whose rolling radius varies is changed with the rotational angular velocities of the other tires.

However, the rolling radius of the tire varies depending on not only (1) the change in the tire pressure, but also (2) the load on the tire, (3) the rotation speed of the tire, (4) the slip angle of the tire, (5) the camber angle of the tire, (6) whether the vehicle is being accelerated or braked, (7) whether the vehicle is cornering, (8) the wear of the tire, and the like, as described above.

In order to accurately detect a tire pressure drop, therefore, it is necessary to inhibit the tire pressure drop under particular conditions or correct the calculated rotational angular velocity of the tire so as to remove the variation in the rolling radius depending on the foregoing items (2) to (8).

Description is now made sequentially of a case where the detection is inhibited and a case where the calculated rotational angular velocity is corrected.

<u>When detection of tire pressure drop is inhibited:</u> There are the following cases (1) to (6).

(1) When the vehicle is traveling at significantly low speed, a sufficient AC voltage signal $e_i$ for binarizating is not obtained from the wheel speed sensor 1 shown in Fig. 3. Consequently, the output of the wheel speed sensor 1 may not, in some cases, be correctly binarized.

If the speed of the vehicle is not more than a predetermined speed, therefore, the detection of the wheel speed pulses is inhibited.

As a specific method of inhibiting the detection of the wheel speed pulses, the detection of a tire pressure drop is inhibited if the number of pulses counted is less than a predetermined specified value in the measuring period $\Delta t$ described in Fig. 7, for example.

More preferably, if there is a rapid increase or decrease between the number of pulses in a certain measuring period $\Delta t$ and the number of pulses in the succeeding measuring period $\Delta t$, the detection of the tire pressure drop is inhibited. This is because it is considered that the rapid increase or decrease of the number of pulses in a predetermined measuring period $\Delta t$ is due to a slip of the tire or the like. If such data is used, there is a high probability that erroneous judgment will be made.

More preferably in the above case, the generating period of the wheel speed pulses applied is monitored, to inhibit the detection of the tire pressure drop based on the number of wheel speed pulses within the measuring period $\Delta t$ including the pulses if the generating period of the wheel speed pulses exceeds a specified value. This is because the case where the generating period of the wheel speed pulses exceeds a specified value results from a slip of the tire or the like.

(2) When the vehicle is being accelerated, the tire may slip in some cases, which is a factor of erroneous detection. Therefore, the ratio of the rotational angular velocities of a driving wheel and a driven wheel, for example, a front wheel and a rear wheel of the vehicle is found, to inhibit the detection if the value of the ratio exceeds a specified value. In this case, the ratio of the rotational angular velocity of the driving wheel to the rotational angular velocity of the driven wheel may be found using the average value of the rotational angular velocities of the two front tires being driving wheels and the average value of the rotational angular velocities of the two rear tires being driven wheels.

(3) While the vehicle is turning a sharp curve, the tire skids, for example, which is a factor of erroneous detection. The radius of curvature R of a road on which the vehicle is traveling is estimated by the following equation (4), to inhibit the detection when the value R is below a specified value:

$$\frac{1}{R} = A \left| \frac{(F1 + F3) - (F2 + F4)}{F1 + F2 + F3 + F4} \right| \qquad (4)$$

where F1, F2, F3, F4 :   the rotational angular velocities of the left front tire, the right front tire, the left rear tire and the right rear tire,

A :                          a constant determined by the vehicle

Specifically, when the road on which the vehicle is traveling makes a curve having a small radius of curvature such as a hairpin curve or a spoon curve, the detection of the tire pressure drop is inhibited.

(4) While the vehicle is cornering, large lateral acceleration G is applied when the speed of the vehicle is high or the cornering diameter is small, so that the tire pressure drop may, in some cases, be erroneously detected due to a slip of the tire or the like. Therefore, the lateral acceleration G produced in the vehicle is estimated by the following equation (5), to inhibit the detection when the value of G exceeds a specified value:

$$G = B \left| \{ (F1 + F3) - (F2 + F4) \} (F1 + F2 + F3 + F4) \right| \qquad (5)$$

where F1, F2, F3, F4 :   the rotational angular velocities of the left front tire, the right front tire, the left rear tire and the right rear tire,

B :                          a constant determined by the vehicle

A gravity sensor may be mounted on the vehicle to detect the lateral acceleration G produced in the vehicle by the gravity sensor instead of estimating the lateral acceleration G produced in the vehicle on the basis of the equation (5).

(5) When the vehicle is changed from a linearly traveling state to a cornering state or from a cornering state to a linearly traveling state, that is, at the beginning or the end of cornering, the behavior of the vehicle enters a transient state. Therefore, the movement of the load in the vehicle, for example, is unfixed, which is a factor of erroneous detection of the tire pressure drop. At the beginning and the end of cornering at which the behavior of the vehicle enters a transient state, the detection is inhibited. Judgment as to whether or not the detection is inhibited is made on the basis of the rate of change of the value of the lateral acceleration G produced in the vehicle (this value may be a value estimated by the equation (5) or a value measured by the gravity sensor). If the rate of change exceeds a specified value, the detection is inhibited.

(6) While the ABS, a parking brake, a traction control device or the like provided for the vehicle is being operated, the wheels are not normally rotated. This may cause a slip of the tire in some cases, resulting in a factor of erroneous detection for the DWS. Therefore, the ABS, the parking brake and the traction control device are respectively connected to the DWS by signal lines. When the ABS, the parking brake or the traction control device is being operated, a signal informing of its operation is applied to the DWS. If the signal informing of the operation of any one of the ABS, the parking brake and the traction control device is applied to the DWS, the detection processing is not performed in the DWS.

The specified value being the basis of judgment as to whether or not the detection in each of the items (1) to (5) is inhibited is predetermined and is stored in the non-volatile memory 27 (see Fig. 4). Consequently, the CPU 24 reads out the specified value stored in the non-volatile memory 27, to determine whether detection processing of the tire pressure drop is performed or inhibited by comparing the lateral acceleration G with the specified value.

When rotational angular velocity is corrected: There are the following cases (1) and (2).

(1) As described above, the rolling radius of the tire is changed depending on not only the change in the pneumatic pressure of the tire but also the travel speed of the vehicle. In order to accurately extract the relationship between the rolling radius and the pneumatic pressure of the tire, therefore, it is necessary to previously find the amount of the variation of the rolling radius of the tire depending on the travel speed of the vehicle for each travel speed, correct the amount of the variation at the time of detection processing of the tire pressure drop and consequently, correct the rotational angular velocity of the tire.

If $\Delta r$ is taken as the amount of the variation of the rolling radius of the tire with respect to the travel speed of the vehicle, the following equation holds:

$$\Delta r = f(v)$$

where f :    a function determined by the vehicle

v :    the travel speed of the vehicle, which can be replaced with the average of the rotational angular velocities of the four tires

If $r_0$ is taken as the radius at the time of the tire stopping, whose pneumatic pressure is normal, the change in the rolling radius of the tire is as follows:

$$(r_0 + \Delta r) / r_0 = 1 + \Delta r / r_0$$
$$= 1 + f(v) / r_0 = 1 + C_f(v)$$

where C :    a constant

If Fx (Fx = F1, F2, F3 or F4) is taken as the rotational angular velocity of the tire, therefore, the following relationship holds:

$$Fx \propto (1 / r_0)$$

The following is the actual rotational angular velocity of the tire:

$$Fx' \propto \frac{1}{r_0(1 + Cf(v))}$$

Accordingly, the rotational angular velocity Fx is corrected as follows:

$$Fx = \{ 1 + Cf (v) \} Fx'$$

Alternatively, the rates of change in the rotational angular velocity of the tire may be previously measured for each typical speed of the vehicle, for example, 50 Km/h, 100 Km/h and 150 Km/h and stored in the form of a table in the non-volatile memory 27 or the ROM 25 as the amounts of correction for correcting the detected rotational angular velocity. Any one of the rates of change may be read out from the non-volatile memory 27 depending on the travel speed of the vehicle to correct the detected rotational angular velocity.

(2) While the vehicle is cornering, the rolling radius of the tire varies depending on the lateral acceleration G produced in the vehicle. While the vehicle is cornering, therefore, the rotational angular velocity varies depending on the variation in the rolling radius of the tire, so that the rotational angular velocity must be corrected.

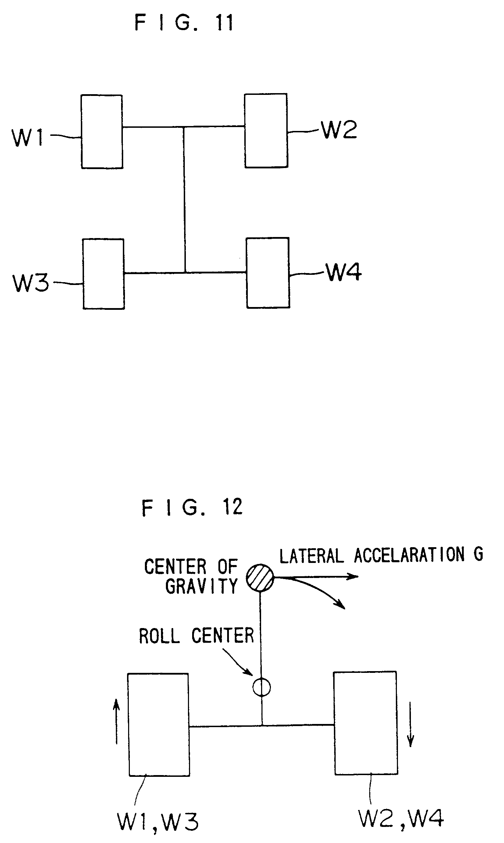

Meanwhile, it can be judged in the following manner on the basis of the outputs of the wheel speed sensors whether the vehicle is linearly traveling or is cornering. Specifically, when both the difference or the ratio of the left and right front tires W1 and W2 and the difference or the ratio of the left and right rear tires W3 and W4 exceeds a certain specified value, it can be judged that the vehicle is cornering. In the other cases, it can be judged that the vehicle is linearly traveling. If it is judged that the vehicle is cornering, the following correction is made. Thus, if it is judged whether or not the vehicle is linearly traveling or is cornering on the basis of the outputs of the wheel speed sensors, there is no need to provide a steering angle sensor in this DWS, enabling to make the DWS in lower-cost and simpler construction. In Fig. 12, if the traverse gravity G is applied to the vehicle, the angular moment is generated around the roll center in the vehicle, so that a force proportional thereto is exerted on each of the tires W1, W2, W3 and W4. The rolling radius of the tire is affected by the load as described above, and varies in proportion to the load. While the vehicle is cornering, therefore, the amount of the variation of the rolling radius can be represented by a function of the lateral acceleration G. If $\Delta r$ is taken as the amount of the variation and $r_0$ is taken as the initial radius of the tire, the amount of change in the rolling radius of the tire is as follows:

$$(r_0 + \Delta r) / r_0 = 1 + \Delta r / r_0 = 1 + f (G)$$

where f :     a function determined by the vehicle, which is determined for each tire

While the vehicle is cornering, therefore, if Fx (Fx = F1, F2, F3 or F4) is taken as the rotational angular velocity of each of the tires, the rotational angular velocity can be corrected by setting $Fx' = Fx (1 + f (G))$ .

The above described correction factor f (G) may be represented as a continuous function, or $\Delta r / r_0$ measured for each typical value of G may be stored as the correction factor f (G) in the form of a table in the non-volatile memory 27.

If the rotational angular velocities of the tires thus calculated are corrected, the tire pressure drop can be detected using the corrected rotational angular velocities of the tires, regardless of whether the rotational angular velocities of the tires are detected while the vehicle is being accelerated or decelerated or while the vehicle is cornering. Accordingly, it is possible to reduce a state where the tire pressure drop cannot be detected, thus avoiding a state where the tire pressure drop cannot be detected for a long time period depending on the conditions of the road, for example.

Description is now made of control for judgment of a reduced pressure tire which is carried out by the CPU 24 shown in Fig. 4 referring to a flow chart.

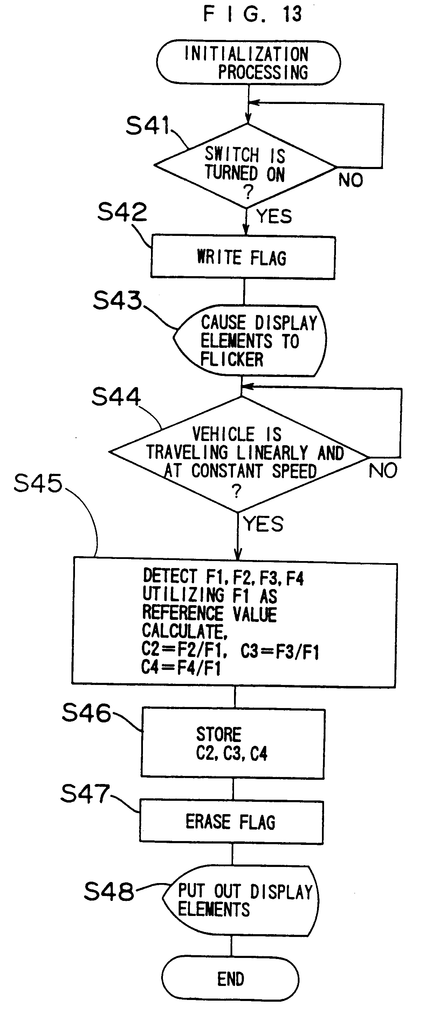

Fig. 13 is a flow chart showing an initialization processing required before judgment processing of a reduced pressure tire. The initialization processing is that which required from the following reasons.

Even if the pneumatic pressures of the four tires W1, W2, W3 and W4 of the vehicle are all normal, the rolling radii of the four tires are not necessarily the same depending on the difference between loads on the respective tires due to the weight distribution of the vehicle, the wear of the tires, the variation in the manufacture of the tires, and the like. For the subsequent accurate detection of the tire pressure drop, therefore, it is essential to correct the initial variation of the rolling radii of the four tires by initialization.

Referring to Fig. 13, the initialization processing is started on receipt of the operation of the initialization switch 15 (see Figs. 1 and 4) (step S41).

If it is judged that the initialization switch 15 is turned on, the CPU 24 writes an initialization flag in the non-volatile memory 27 (step S42). The reason why the initialization flag is written in the non-volatile memory 27 is that a correction factor may, in some cases, be incorrectly found if the power supply of the DWS is turned off during the initialization processing. If this incorrect correction factor is used, the DWS may perform erroneous detection. Therefore, an attempt is made to ensure the contents of the non-volatile memory 27 by writing the initialization flag in the non-volatile memory 27.

The display elements W1 to W4 of the four tires in the display 22 (see Fig. 4) are then caused to flicker to inform a driver that the initialization processing is being performed (step S43).

After the initialization switch 15 is depressed, the vehicle travels linearly and at constant speed by the driver. The CPU 24 judges whether or not the vehicle is traveling linearly and at constant speed on the basis of the wheel speed pulses from the wheel speed sensors (step S44). As described above, it is judged that the vehicle is traveling linearly when both the difference or the ratio of the rotational angular velocities of the left and right front tires W1 and W2 and the difference or the ratio of the rotational angular velocities of the left and right rear tires W3 and W4 do not exceed a certain specified value.

Furthermore, it is judged that the vehicle is traveling at constant speed if the rate of change in the average value of the wheel speed pulses applied from the four wheel speed sensors is within a certain specified value.

In this case, the rotational angular velocities F1, F2, F3 and F4 of the four tires are detected. In addition, the rotational angular velocity of one arbitrary tire, for example, F1 is taken as a reference value, the ratios of the rotational angular velocities of the other tires to the reference value F1 are respectively found and are taken as correction factors with respect to the respective tires. Specifically, a correction factor C2 shall be F2 / F1 with respect to the tire W2, a correction factor C3 shall be F3 / F1 with respect to the tire W3, and a correction factor C4 shall be F4 / F1 with respect to the tire W4 (step S45).

The found correction factors C2, C3 and C4 are stored in the non-volatile memory 27 (step S46). On the other hand, the initialization flag written in the non-volatile memory 27 is erased (step S47), and the tire indicator lamps of the display 22 are put out (step S48), so that this processing is terminated.

When the DWS is operated after the initialization processing is terminated, that is, when the ignition key of the vehicle is turned on, the CPU 24 judges whether or not the initialization flag is written in the non-volatile memory 27. If the initialization flag is written, a request to perform initialization processing again is displayed on the display 22, for example. Alternatively, the request may be reported by a buzzer or the like.

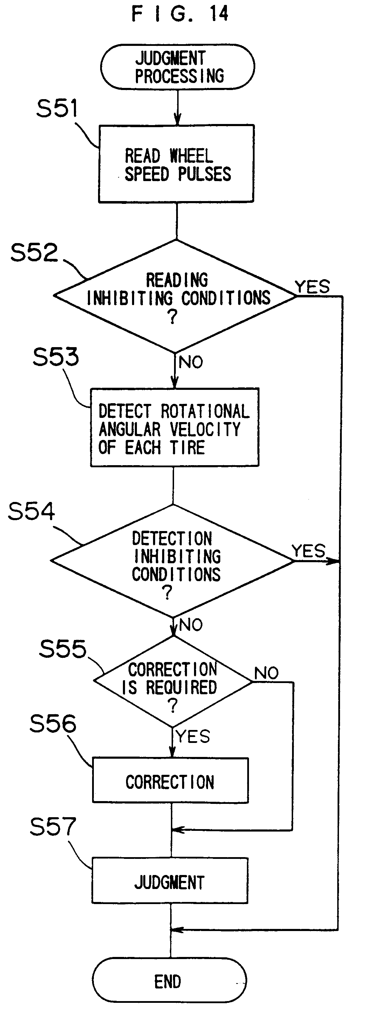

Description is now made of judgment processing of a reduced pressure tire with reference to a flow chart of Fig. 14.

First, the wheel speed pulses applied from the binarizating circuit 14 in the control unit for ABS 6 described in Fig. 4 are read (step S51). It is judged whether or not the read wheel speed pulses meet pulse reading inhibiting conditions (the above case (1) where the detection of the tire pressure drop is inhibited) (step S52). If the wheel speed pulses meet the pulse reading inhibiting conditions, the subsequent processing is not performed.

If the wheel speed pulses do not meet the pulse reading inhibiting conditions, the rotational angular velocities F1, F2, F3 and F4 of the respective tires are calculated (step S53). It is judged, on the basis of the calculated rotational angular velocities F1 to F4, whether or not the vehicle is in the detection inhibiting conditions (the cases (2) to (6) where the detection of the tire pressure drop is inhibited) (step S54). If the vehicle is in the detection inhibiting conditions, the subsequent processing is not performed.

If the vehicle is not in the detection inhibiting conditions, it is further judged whether or not the rotational angular velocities F1 to F4 must be corrected (step S55). The correction varies depending on the travel speed of the vehicle and whether or not the vehicle is cornering, as described above. If the correction is required, the calculated rotational angular velocities F1 to F4 of the respective tires are corrected (step S56).

Using the corrected rotational angular velocities F1 to F4, on the basis of the judging equation (3) for finding the ratio dF of the sum of the rotational angular velocities, for example, (F1 + F4) of a pair of tires on a diagonal line to the sum of the rotational angular velocities (F2 + F3) of the other pair of tires on another diagonal line, it is judged whether the reduced pressure tires exists or not, as mentioned above, and a tire whose pneumatic pressure drops is specified (step 57).

Although in the embodiment, the rotational angular velocities of the tires W1 to W4 are calculated utilizing the output pulses of the wheel speed sensors 1 provided for the ABS, a wheel speed sensor for DWS may be mounted on a vehicle provided with no ABS.

INDUSTRIAL APPLICABILITY

As described in the foregoing, a device for and a method of detecting a tire pressure drop in the present invention are useful in detecting a tire pressure drop for a four-wheel vehicle. In the case, the tire pressure drop can be detected with high precision in the present invention.

**Claims**

1. A tire pressure drop detecting device for a four-wheel vehicle having four tires (W1, W2, W3, W4), comprising:

   pulse outputting means (1, 14) respectively provided in relation to said four tires (W1, W2, W3, W4) for outputting pulses proportional to the rotation of the respective tires (W1, W2, W3, W4);

counting means (23, 24, 25, 26, 27; 16; 28) connected to the pulse outputting means (1, 14) for counting the pulses applied from the pulse outputting means (1, 14) within a predetermined measuring period;

storing means (26; 16; 28) storing the time when the last pulse within each of measuring periods is applied to the counting means (23, 24, 25, 26, 27; 16; 28);

means (24, 25, 26, 27; 16; 28) for calculating the time elapsed from the time when the last pulse in the preceding measuring period is applied to the time when the last pulse in the present measuring period is applied which are stored in the storing means (26; 16; 28) as the reference time of the present measuring period;

means (24, 25, 26, 27; 16; 28) for dividing the number of pulses applied within the present measuring period which are counted by said counting means (23, 24, 25, 26, 27; 16; 28) by said reference time, to calculate the number of pulses per unit time;

means (24, 25, 26, 27; 16; 28) for calculating the rotational angular velocities of the respective tires (W1, W2, W3, W4) on the basis of said calculated number of pulses per unit time; and

reduced pressure tire judging means (23, 24, 25, 26, 27; 16; 28) for comparing the calculated rotational angular velocities of the four tires (W1, W2, W3, W4), to judge whether or not the pneumatic pressure of a tire (W1, W2, W3, W4) drops.

2. The tire pressure drop detecting device according to claim 1, wherein said counting means (23, 24, 25, 26, 27; 16; 28) counts the pulses applied from the pulse outputting means (1, 14) on the basis of the leading edges or the trailing edges of the pulses.

3. The tire pressure drop detecting device according to claim 1 or 2, wherein said reduced pressure tire judging means (23, 24, 25, 26, 27; 16; 28) finds the ratio of the sum of the rotational angular velocities of a pair of tires (W1, W4; W2, W3) on a diagonal line to the sum of the rotational angular velocities of the other pair of tires (W1, W4; W2, W3) on the basis of the calculated rotational angular velocities of the four tires (W1, W2, W3, W4), to judge whether or not the pneumatic pressure of a tire (W1, W2, W3, W4) drops depending on whether the found ratio is larger or smaller than a predetermined value.

4. The tire pressure drop detecting device according to any one of claims 1 to 3, further comprising judging means (23, 24, 25, 26, 27; 16; 28) for judging whether or not said four-wheel vehicle is in a predetermined state which is not suitable for detection of a tire pressure drop,

said reduced pressure tire judging means (23, 24, 25, 26, 27; 16; 28) not performing an operation for the detection when said judging means (23, 24, 25, 26, 27; 16; 28) judges that the four-wheel vehicle is in the state which is not suitable for the detection.

5. The tire pressure drop detecting device according to claim 4, wherein said predetermined state which is not suitable for the detection of the tire pressure drop comprises

(1) a case where the four-wheel vehicle is traveling at a low speed of not more than a predetermined speed,
(2) a case where the four-wheel vehicle is being accelerated or decelerated at not less than a predetermined rate,
(3) a case where the four-wheel vehicle is cornering on a road having a smaller radius than a predetermined radium of curvature,
(4) a case where lateral acceleration of nor less than a predetermined value is produced in the four-wheel vehicle,
(5) a case where the four-wheel vehicle is changed from a linearly traveling state to a cornering state or from a cornering state to a linearly traveling state, and the rate of change in the lateral acceleration produced by the change exceeds a predetermined specified value, or
(6) a case where a particular device provided for the four-wheel vehicle is being operated.

6. The tire pressure drop detecting device according to any one of claims 1 to 5, wherein said rotational angular velocity calculating means (23, 24, 25, 26, 27; 16; 28) comprises correcting means (24, 25, 26, 27; 16; 28) for subjecting the rotational angular velocity of each of the tires (W1, W2, W3, W4) detected by the rotational angular velocity detecting means (23, 24, 25, 26, 27; 16; 28) to a suitable correction on the basis of the behavior of said four-wheel vehicle.

7. The tire pressure drop detecting device according to any one of claims 1 to 6, wherein said pulse outputting means (1, 14) and said counting means (23, 24, 25, 26, 27; 16; 28) are used, when the vehicle is provided with an anti-lock braking system (2, 3, 4, 5, 6), with pulse outputting means (1, 14) and counting means (16; 28) for the anti-lock braking system (2, 3, 4, 5, 6).

8. The tire pressure drop detecting device according to any one of claims 1 to 7, wherein

said four-wheel vehicle has an anti-lock braking system (2, 3, 4, 5, 6), and
said storing means (24, 26, 27; 16; 28), said calculating means (24, 25, 26, 27; 16; 28) and said reduced pressure tire judging means (23, 24, 25, 26, 27; 16; 28) are realized by using a part of a microcomputer (16) for the anti-lock braking system (2, 3, 4, 5, 6).

9. The tire pressure drop detecting device according to claim 7 or 8, wherein said pulse outputting means (1, 14) and said counting means (23, 24, 25, 26, 27; 16; 28) are used with pulse outputting means (1, 14) and counting means (16; 28) for the anti-lock braking system (2, 3, 4, 5, 6).

10. The tire pressure drop detecting device according to any one of claims 6 to 9, wherein said correcting means (23, 24, 25, 26, 27; 16; 28) corrects the detected rotational angular velocities of the respective tires (W1, W2, W3, W4) depending on the travel speed of the four-wheel vehicle.

11. The tire pressure drop detecting device according to any one of claims 6 to 10, wherein said correcting means (23, 24, 25, 26, 27; 16; 28) corrects the detected rotational angular velocities of the respective tires (W1, W2, W3, W4) when the four-wheel vehicle is cornering.

12. The tire pressure drop detecting device according to any one of claims 6 to 11, wherein said correcting means (23, 24, 25, 26, 27; 16; 28) finds the amount of the variation in the rolling radius due to the effect of the travel speed of the vehicle on the basis of a predetermined function representing the relationship between the travel speed of the vehicle and the amount of the variation in the rolling radius, to correct the rotational angular velocities of the tires (W1, W2, W3, W4) on the basis of the found amount of the variation in the rolling radius.

13. The tire pressure drop detecting device according to any one of claims 6 to 12, wherein said correcting means (23, 24, 25, 26, 27; 16; 28) comprises storing means (25, 26, 27; 16; 28) for storing a table representing the relationship between the travel speed of the vehicle and the amount of the variation in the rolling radius, the contents stored in the storing means (25, 26, 27; 16; 28) for being read out to find the amount of the variation in the rolling radius due to the effect of the travel speed of the vehicle, to correct the rotational angular velocities of the respective tires (W1, W2, W3, W4) on the basis of the found amount of the variation in the rolling radius.

14. The tire pressure drop detecting device according to any one of claims 6 to 13, wherein said correcting means (23, 24, 25, 26, 27; 16; 28) judges that the vehicle is cornering when the difference or the ratio of the rotational angular velocities of the left and right front tires (W1, W2) and/or the difference or the ratio of the rotational angular velocities of the left and right rear tires (W3, W4) exceed a specified value, to correct the rotational angular velocities of the tires (W1, W2, W3, W4) on the basis of the lateral acceleration calculated on the basis of the rotational angular velocities of the tires (W1, W2, W3, W4).

15. The tire pressure drop detecting device according to any one of claims 1 to 14, further comprising display means (22) for displaying the results of the judgment by said reduced pressure tire judging means (23, 24, 25, 26, 27; 16; 28).

16. The tire pressure drop detecting device according to any one of claims 1 to 15, wherein said display means (22) comprises display elements corresponding to the four tires (W1, W2, W3, W4), the display element corresponding to the tire whose pneumatic pressure drops lighting up or flickering, and all the display elements lighting up for a predetermined time period after an ignition switch of the vehicle is turned on.

17. A tire pressure drop detecting method for a four-wheel vehicle having four tires (W1, W2, W3, W4), comprising the steps of:

outputting pulses proportional to the rotation of the respective tires (W1, W2, W3, W4);
counting the pulses within a predetermined measuring period;
storing the time when the last pulse within each of measuring periods is counted;

calculating the time elapsed from the time when the last pulse in the preceding measuring period is counted to the time when the last pulse in the preceding measuring period is counted to the time when the last pulse in the present measuring period is counted which is stored as the reference time of the present measuring period;

dividing the number of pulses counted within the present measuring period by said reference time, to calculate the number of pulses per unit time;

calculating the rotational angular velocities of the respective tires (W1, W2, W3, W4) on the basis of said calculated number of pulses per unit time; and

comparing the calculated rotational angular velocities of the four tires (W1, W2, W3, W4), to judge whether or not the pneumatic pressure of a tire (W1, W2, W3, W4) drops.

18. The tire pressure drop detecting method according to claim 17, wherein said counting is based on the arising edges or the falling edges of the pulses.

19. The tire pressure drop detecting method according to claim 17 or 18, wherein said comparing finds the ratio of the sum of the rotational angular velocities of a pair of tires (W1, W4; W2, W3) on a diagonal line to the sum of the rotational angular velocities of the other pair of tires (W1, W4, W2, W3) on the basis of the calculated rotational angular velocities of the four tires (W1, W2, W3, W4), to judge whether or not the pneumatic pressure of a tire drops depending on whether the found ratio is larger or smaller than a predetermined value.

20. The tire pressure drop detecting method according to any one of claims 17 to 19, further comprising the step of judging whether or not said four-wheel vehicle is in a predetermined state which is not suitable for detection of a tire pressure drop,

said comparing being not performed when it is judged that the four-wheel vehicle is in the state which is not suitable for the detection.

21. The tire pressure drop detecting method according to claim 20, wherein said predetermined state which is not suitable for the detection of the tire pressure drop comprises

(1) a case where the four-wheel vehicle is traveling at a low speed of not more than a predetermined speed,
(2) a case where the four-wheel vehicle is being rapidly accelerated or decelerated at not less than a predetermined rate,
(3) a case where the four-wheel vehicle is cornering on a road having a smaller radius than a predetermined radium of curvature,
(4) a case where lateral acceleration of nor less than a predetermined value is produced in the four-wheel vehicle,
(5) a case where the four-wheel vehicle is changed from a linearly traveling state to a cornering state or from a cornering state to a linearly traveling state, and the rate of change in the transverse gravity produced by the change exceeds a predetermined specified value, or
(6) a case where a particular device provided for the four-wheel vehicle is being operated.

22. The tire pressure drop detecting method according to any one of claims 17 to 21, wherein said step of calculating the rotational angular velocity comprises the step of subjecting the rotational angular velocity of each of the tires (W1, W2, W3, W4) to a suitable correction on the basis of the behavior of said four-wheel vehicle.

23. The tire pressure drop detecting method according to any one of claims 17 to 22, wherein said steps of pulse outputting and of counting are used, when the vehicle is provided with an anti-lock braking system (2, 3, 4, 5, 6), with pulse outputting means (1, 14) and counting means (16; 28) for the anti-lock braking system (2, 3, 4, 5, 6).

24. The tire pressure drop detecting method according to any one of claims 17 to 23, wherein

said four-wheel vehicle has an anti-lock braking system (2, 3, 4, 5, 6), and
said steps of storing, calculating, comparing and judging are realized by using a part of a microcomputer (16) for the anti-lock braking system (2, 3, 4, 5, 6).

25. The tire pressure drop detecting method according to claim 23 or 24, wherein said steps of outputting pulses and of counting are performed by or for the anti-lock braking system (2, 3, 4, 5, 6).

26. The tire pressure drop detecting method according to any one of claims 17 to 25, wherein the detected rotational angular velocities of the respective tires (W1, W2, W3, W4) are corrected depending on the travel speed of the four-wheel vehicle.

27. The tire pressure drop detecting method according to any one of claims 17 to 26, wherein the detected rotational angular velocities of the respective tires (W1, W2, W3, W4) are corrected when the four-wheel vehicle is cornering.

28. The tire pressure drop detecting method according to any one of claims 17 to 27, wherein the amount of the variation in the rolling radius due to the effect of the travel speed of the vehicle is based on a predetermined function representing the relationship between the travel speed of the vehicle and the amount of the variation in the rolling radius, and the rotational angular velocities of the tires (W1, W2, W3, W4) are corrected on the basis of the amount of the variation in the rolling radius.

29. The tire pressure drop detecting method according to any one of claims 26 to 28, wherein said step of correcting comprises storing a table representing the relationship between the travel speed of the vehicle and the amount of the variation in the rolling radius, the contents stored being read out to find the amount of the variation in the rolling radius due to the effect of the travel speed of the vehicle, to correct the rotational angular velocities of the respective tires (W1, W2, W3, W4) on the basis of the found amount of the variation in the rolling radius.

30. The tire pressure drop detecting method according to any one of claims 26 to 29, wherein it is judged that the vehicle is cornering when the difference or the ratio of the rotational angular velocities of the left and right front tires (W1, W2) and/or the difference or the ratio of the rotational angular velocities of the left and right rear tires (W3, W4) exceed a specified value, to correct the rotational angular velocities of the tires (W1, W2, W3, W4) on the basis of the lateral acceleration calculated on the basis of the rotational angular velocities of the tires (W1, W2, W3, W4).

31. The tire pressure drop detecting method according to any one of claims 17 to 30, further comprising the step of displaying the results of the judgment.

32. The tire pressure drop detecting method according to claim 31 , wherein said step of displaying comprises displaying the tire whose pneumatic pressure drops by lighting up or flickering, and displaying all tires (W1, W2, W3, W4) by lighting up for a predetermined time period after an ignition switch of the vehicle is turned on.

**Patentansprüche**

1. Reifendruckabfall-Detektionsvorrichtung für ein vierrädriges Fahrzeug mit vier Reifen (W1, W2, W3, W4), umfassend: Pulsausgabeeinrichtungen (1, 14), welche entsprechend den vier Reifen (W1, W2, W3, W4) zur Ausgabe von Pulsen proportional zu der Drehung der entsprechenden Reifen (W1, W2, W3, W4) vorgesehen sind;

Zähleinrichtungen (23, 24, 25, 26, 27; 16; 28), welche mit den Pulsausgabeeinrichtungen (1, 14) verbunden sind, zum Zählen der von den Pulsausgabeeinrichtungen (1, 14) innerhalb einer vorgegebenen Meßperiode angelegten bzw. eingeleiteten Pulse;
Speichereinrichtungen (26; 16; 28), welche die Zeit speichern, zu welcher der letzte Puls innerhalb jeder Meßperiode an den Zähleinrichtungen (23, 24, 25, 26, 27; 16; 28) angelegt bzw. eingeleitet wird;
Einrichtungen (24, 25, 26, 27; 16; 28) zur Berechnung der Zeit, welche von der Zeit vergangen ist, zu welcher der letzte Puls in der vorhergehenden Meßperiode angelegt bzw. eingeleitet wurde, bis zu der Zeit, zu welcher der letzte Puls in der gegenwärtigen Meßperiode angelegt bzw. eingeleitet wurde, welche in der Speichereinrichtung (26; 16; 28) als die Bezugszeit der gegenwärtigen Meßperiode gespeichert sind;
Einrichtungen (24, 25, 26, 27; 16; 28) zur Division der Anzahl der Pulse, welche in der gegenwärtigen Meßperiode angelegt bzw. eingeleitet werden, welche durch die Zähleinrichtungen (23, 24, 25, 26, 27; 16; 28) gezählt werden, durch die Bezugszeit, um die Anzahl von Pulsen pro Zeiteinheit zu berechnen;
Einrichtungen (24, 25, 26, 27; 16; 28) zur Berechnung der Drehwinkelgeschwindigkeiten der entsprechenden Reifen (W1, W2, W3, W4) auf der Basis der berechneten Anzahl von Pulsen pro Zeiteinheit; und
Reifenbeurteilungseinrichtungen für reduzierten Druck (23, 24, 25, 26, 27; 16; 28) für ein vergleichen der berechneten Drehwinkelgeschwindigkeiten der vier Reifen (W1, W2, W3, W4), um zu beurteilen, ob der Luftdruck eines Reifens (W1, W2, W3, W4) fällt oder nicht.

2. Reifendruckabfall-Detektionsvorrichtung nach Anspruch 1, worin die Zähleinrichtungen (23, 24, 25, 26, 27; 16; 28) die von den Pulsausgabeeinrichtungen (1, 14) angelegten bzw. eingeleiteten Pulse auf der Basis der Anstiegsflanken oder der Abfallflanken der Pulse zählen.

3. Reifendruckabfall-Detektionsvorrichtung nach Anspruch 1 oder 2, worin die Reifenbeurteilungseinrichtungen für reduzierten Druck (23, 24, 25, 26, 27; 16; 28) das Verhältnis der Summe der Drehwinkelgeschwindigkeiten eines Paares von Reifen (W1, W4; W2, W3) auf einer diagonalen Linie zu der Summe der Drehwinkelgeschwindigkeiten des anderen Paares von Reifen (W1, W4; W2, W3) auf der Basis der berechneten Drehwinkelgeschwindigkeiten der vier Reifen (W1, W2, W3, W4) ermittelt, um zu bestimmen, ob der Luftdruck eines Reifens (W1, W2, W3, W4) in Abhängigkeit davon, ob das gefundene Verhältnis größer oder kleiner als ein vorbestimmter Wert ist, fällt oder nicht.

4. Reifendruckabfall-Detektionsvorrichtung nach einem der Ansprüche 1 bis 3, weiters umfassend Beurteilungseinrichtungen (23, 24, 25, 26, 27; 16; 28) zur Beurteilung, ob sich das vierrädrige Fahrzeug in einem vorbestimmten Zustand, welcher nicht für eine Detektion eines Reifendruckabfalls geeignet ist, befindet oder nicht,

   wobei die Reifenbeurteilungseinrichtungen für reduzierten Druck (23, 24, 25, 26, 27; 16; 28) einen Vorgang der Detektion nicht durchführen, wenn die Beurteilungseinrichtungen (23, 24, 25, 26, 27; 16; 28) feststellen, daß sich das vierrädrige Fahrzeug in dem Zustand befindet, welcher für die Detektion nicht geeignet ist.

5. Reifendruckabfall-Detektionsvorrichtung nach Anspruch 4, worin der vorbestimmte Zustand, welcher für die Detektion des Reifendruckabfalls nicht geeignet ist, umfaßt

   (1) einen Fall, in welchem das vierrädrige Fahrzeug sich mit einer geringen Geschwindigkeit von nicht mehr als einer vorgegebenen Geschwindigkeit bewegt,
   (2) einen Fall, in welchem das vierrädrige Fahrzeug mit nicht weniger als einer vorgegebenen Rate beschleunigt oder abgebremst wird,
   (3) einen Fall, in welchem das vierrädrige Fahrzeug auf einer Straße eine Kurve fährt, welche einen kleineren Radius als einen vorgegebenen Krümmungsradius aufweist,
   (4) einen Fall, in welchem eine Seitenbeschleunigung mit nicht weniger als einem vorbestimmten Wert in dem vierrädrigen Fahrzeug erzeugt wird,
   (5) einen Fall, in welchem das vierrädrige Fahrzeug von einem gerade fahrenden Zustand zu einem Kurvenfahrzustand oder von einem Kurvenfahrzustand zu einem gerade fahrenden Zustand wechselt und die Änderungsrate in der durch den Wechsel erzeugten Seitenbeschleunigung einen vorgegebenen, speziellen Wert übersteigt, oder
   (6) einen Fall, in welchem eine für das vierrädrige Fahrzeug vorgesehene, spezielle Vorrichtung betätigt wird.

6. Reifendruckabfall-Detektionsvorrichtung nach einem der Ansprüche 1 bis 5, worin die Berechnungseinrichtungen für die Drehwinkelgeschwindigkeiten (23, 24, 25, 26, 27; 16; 28) Korrektureinrichtungen (24, 25, 26, 27; 16; 28) umfassen, um die Drehwinkelgeschwindigkeit jedes Reifens (W1, W2, W3, W4), welche durch die Detektionseinrichtungen für die Drehwinkelgeschwindigkeit (23, 24, 25, 26, 27; 16; 28) festgestellt werden, einer geeigneten Korrektur auf der Basis des Verhaltens des vierrädrigen Fahrzeugs zu unterwerfen.

7. Reifendruckabfall-Detektionsvorrichtung nach einem der Ansprüche 1 bis 6, worin die Pulsausgabeeinrichtungen (1, 14) und die Zähleinrichtungen (23, 24, 25, 26, 27; 16; 28) verwendet werden, wenn das Fahrzeug mit einem Antiblockier-Bremssystem (2, 3, 4, 5, 6), mit Pulsausgabeeinrichtungen (1, 14) und Zähleinrichtungen (16; 28) für das Antiblockier-Bremssystem (2, 3, 4, 5, 6) versehen ist.

8. Reifendruckabfall-Detektionsvorrichtung nach einem der Ansprüche 1 bis 7, worin

   das vierrädrige Fahrzeug ein Antiblockier-Bremssystem (2, 3, 4, 5, 6) aufweist, und
   die Speichereinrichtungen (24, 26, 27; 16; 28), die Berechnungseinrichtungen (23, 24, 25, 26, 27; 16; 28) und die Reifenbeurteilungseinrichtungen für reduzierten Druck (23, 24, 25, 26, 27; 16; 28) durch Verwendung eines Teils eines Mikrocomputers (16) für das Antiblockier-Bremssystem (2, 3, 4, 5, 6) ausgebildet sind.

9. Reifendruckabfall-Detektionsvorrichtung nach Anspruch 7 oder 8, worin die Pulsausgabeeinrichtungen (1, 14) und die Zähleinrichtungen (23, 24, 25, 26, 27; 16; 28) mit Pulsausgabeeinrichtungen (1, 14) und Zähleinrichtungen (16; 28) für das Antiblockier-Bremssystem (2, 3, 4, 5, 6) verwendet sind.

10. Reifendruckabfall-Detektionsvorrichtung nach einem der Ansprüche 6 bis 9, worin die Korrektureinrichtungen (23, 24, 25, 26, 27; 16; 28) die detektierten Drehwinkelgeschwindigkeiten der entsprechenden Reifen (W1, W2, W3, W4) in Abhängigkeit von der Fahrgeschwindigkeit des vierrädrigen Fahrzeugs korrigiert.

11. Reifendruckabfall-Detektionsvorrichtung nach einem der Ansprüche 6 bis 10, worin die Korrektureinrichtungen (23, 24, 25, 26, 27; 16; 28) die detektierten Drehwinkelgeschwindigkeiten der entsprechenden Reifen (W1, W2, W3, W4) korrigiert, wenn das vierrädrige Fahrzeug eine Kurve fährt.

12. Reifendruckabfall-Detektionsvorrichtung nach einem der Ansprüche 6 bis 11, worin die Korrektureinrichtungen (23, 24, 25, 26, 27; 16; 28) das Ausmaß der Änderung in dem Rollradius aufgrund des Effekts der Fahrgeschwindigkeit des Fahrzeugs auf der Basis einer vorbestimmten Funktion findet, welche den Zusammenhang zwischen der Fahrgeschwindigkeit des Fahrzeugs und dem Ausmaß der Änderung des Rollradius darstellt, um die Drehwinkelgeschwindigkeiten der Reifen (W1, W2, W3, W4) auf der Basis des gefundenen Ausmaßes der Änderung in dem Rollradius zu korrigieren.

13. Reifendruckabfall-Detektionsvorrichtung nach einem der Ansprüche 6 bis 12, worin die Korrektureinrichtungen (23, 24, 25, 26, 27; 16; 28) Speichereinrichtungen (25, 26, 27; 16; 28) zur Speicherung einer Tabelle umfassen, welche den Zusammenhang zwischen der Fahrgeschwindigkeit des Fahrzeugs und dem Ausmaß der Änderung im Rollradius repräsentiert, wobei die in den Speichereinrichtungen (25, 26, 27; 16; 28) gespeicherten Inhalte auszulesen sind, um das Ausmaß der Änderung in dem Rollradius aufgrund des Effekts der Fahrgeschwindigkeit des Fahrzeugs zu bestimmen, um die Drehwinkelgeschwindigkeiten der entsprechenden Reifen (W1, W2, W3, W4) auf der Basis des gefundenen Ausmaßes der Änderung in dem Rollradius zu korrigieren.

14. Reifendruckabfall-Detektionsvorrichtung nach einem der Ansprüche 6 bis 13, worin die Korrektureinrichtungen (23, 24, 25, 26, 27; 16; 28) beurteilen, daß das Fahrzeug eine Kurve fährt, wenn die Differenz oder das Verhältnis der Drehwinkelgeschwindigkeiten des linken und rechten Vorderreifens (W1, W2) und/oder die Differenz oder das Verhältnis der Drehwinkelgeschwindigkeiten des linken und rechten Hinterreifens (W3, W4) einen speziellen Wert überschreiten, um die Drehwinkelgeschwindigkeiten der Reifen (W1, W2, W3, W4) auf der Basis der Seitenbeschleunigung zu korrigieren, welche auf der Basis der Drehwinkelgeschwindigkeiten der Reifen (W1, W2, W3, W4) berechnet wurde.

15. Reifendruckabfall-Detektionsvorrichtung nach einem der Ansprüche 1 bis 14, weiters umfassend Anzeigeeinrichtungen (22) zur Anzeige der Resultate der Beurteilung durch die Beurteilungseinrichtungen für reduzierten Druck (23, 24, 25, 26, 27; 16; 28).

16. Reifendruckabfall-Detektionsvorrichtung nach einem der Ansprüche 1 bis 15, worin die Anzeigeeinrichtungen (22) Anzeigeelemente entsprechend den vier Reifen (W1, W2, W3, W4) umfassen, wobei das Anzeigeelement entsprechend dem Reifen, dessen Luftdruck fällt, aufleuchtet oder blinkt und alle Anzeigeelemente für eine vorbestimmte Zeitdauer aufleuchten, nachdem ein Zündschlüssel des Fahrzeugs eingeschaltet wurde.

17. Reifendruckabfall-Detektionsverfahren für ein vierrädriges Fahrzeug mit vier Reifen (W1, W2, W3, W4), umfassend die Schritte:

Ausgabe von Pulsen proportional zu der Umdrehung der entsprechenden Reifen (W1, W2, W3, W4);
Zählen der Pulse innerhalb einer vorgegebenen Meßperiode;
Speichern der Zeit, zu welcher der letzte Puls innerhalb jeder der Zeitperioden gezählt wird;
Berechnen der Zeit, welche von der Zeit vergangen ist, zu welcher der letzte Puls in der vorangehenden Meßperiode gezählt wurde, bis zu der Zeit, zu welcher der letzte Puls in der vorangehenden Meßperiode gezählt wurde, bis zu der Zeit, zu welcher der letzte Puls in der gegenwärtigen Meßperiode gezählt wird, welche als die Bezugszeit der gegenwärtigen Meßperiode gespeichert wird;
Dividieren der Anzahl der Pulse, welche in der gegenwärtigen Zeitperiode gezählt wurden, durch die Bezugszeit, um die Anzahl von Pulsen pro Zeiteinheit zu berechnen;
Berechnen der Drehwinkelgeschwindigkeiten der entsprechenden Reifen (W1, W2, W3, W4) auf der Basis der berechneten Anzahl von Pulsen pro Zeiteinheit; und
Vergleichen der berechneten Drehwinkelgeschwindigkeiten der vier Reifen (W1, W2, W3, W4), um zu beurteilen, ob der Luftdruck eines Reifens (W1, W2, W3, W4) fällt oder nicht.

18. Reifendruckabfall-Detektionsverfahren nach Anspruch 17, worin die Zählung auf den Anstiegsflanken oder den Abfallflanken der Pulse basiert.

19. Reifendruckabfall-Detektionsverfahren nach Anspruch 17 oder 18, worin das Vergleichen das Verhältnis der Summe der Drehwinkelgeschwindigkeiten eines Reifenpaares (W1, W4; W2, W3) auf einer diagonalen Linie zu der Summe der Drehwinkelgeschwindigkeiten des anderen Reifenpaares (W1, W4; W2, W3) auf der Basis der berechneten Drehwinkelgeschwindigkeiten der vier Reifen (W1, W2, W3, W4) findet, um zu beurteilen, ob der Luftdruck eines Reifens in Abhängigkeit davon, ob das gefundene Verhältnis größer oder kleiner als ein vorbestimmter Wert ist, fällt oder nicht.

20. Reifendruckabfall-Detektionsverfahren nach einem der Ansprüche 17 bis 19, weiters umfassend den Schritt eines Beurteilens, ob das vierrädrige Fahrzeug sich in einem vorbestimmten Zustand, welcher für die Detektion eines Reifendruckabfalls nicht geeignet ist, befindet oder nicht, wobei das Vergleichen nicht durchgeführt wird, wenn beurteilt wird, daß sich das vierrädrige Fahrzeug in dem Zustand befindet, welcher für die Detektion nicht geeignet ist.

21. Reifendruckabfall-Detektionsverfahren nach Anspruch 20, worin der vorbestimmte Zustand, welcher für die Detektion des Reifendruckabfalls nicht geeignet ist, umfaßt:

(1) einen Fall, in welchem das vierrädrige Fahrzeug sich mit einer geringen Geschwindigkeit von nicht mehr als einer vorgegebenen Geschwindigkeit bewegt,
(2) einen Fall, in welchem das vierrädrige Fahrzeug mit nicht weniger als einer vorgegebenen Rate schnell beschleunigt oder abgebremst wird,
(3) einen Fall, in welchem das vierrädrige Fahrzeug auf einer Straße eine Kurve fährt, welche einen kleineren Radius als einen vorgegebenen Krümmungsradius aufweist,
(4) einen Fall, in welchem eine Seitenbeschleunigung mit nicht weniger als einem vorbestimmten Wert in dem vierrädrigen Fahrzeug erzeugt wird,
(5) einen Fall, in welchem das vierrädrige Fahrzeug von einem gerade fahrenden Zustand zu einem Kurvenfahrzustand oder von einem Kurvenfahrzustand zu einem gerade fahrenden Zustand wechselt und die Änderungsrate in der durch den Wechsel erzeugten Querbeschleunigung einen vorgegebenen, speziellen Wert übersteigt, oder
(6) einen Fall, in welchem eine für das vierrädrige Fahrzeug vorgesehene, spezielle Vorrichtung betätigt wird.

22. Reifendruckabfall-Detektionsverfahren nach einem der Ansprüche 17 bis 21, worin der Schritt des Berechnens der Drehwinkelgeschwindigkeit den Schritt eines Unterwerfens der Drehwinkelgeschwindigkeit jedes Reifens (W1, W2, W3, W4) einer geeigneten Korrektur auf der Basis des Verhaltens des vierrädrigen Fahrzeugs umfaßt.

23. Reifendruckabfall-Detektionsverfahren nach einem der Ansprüche 17 bis 22, worin die Schritte einer Pulsausgabe und eines Zählens, wenn das Fahrzeug mit einem Antiblockier-Bremssystem (2, 3, 4, 5, 6) versehen ist, mit Pulsausgabeeinrichtungen (1, 14) und Zähleinrichtungen (16; 28) für das Antiblockier-Bremssystem (2, 3, 4, 5, 6) verwendet werden.

24. Reifendruckabfall-Detektionsverfahren nach einem der Ansprüche 17 bis 23, worin

das vierrädrige Fahrzeug ein Antiblockier-Bremssystem (2, 3, 4, 5, 6) aufweist, und
die Schritte eines Speichers, Berechnens, Vergleichens und Beurteilens unter Verwendung eines Teils eines Mikrocomputers (16) für das Antiblockier-Bremssystem (2, 3, 4, 5, 6) realisiert werden.

25. Reifendruckabfall-Detektionsverfahren nach Anspruch 23 oder 24, worin die Schritte einer Ausgabe von Pulsen und eines Zählens durch oder für das Antiblockier-Bremssystem (2, 3, 4, 5, 6) durchgeführt werden.

26. Reifendruckabfall-Detektionsverfahren nach einem der Ansprüche 17 bis 25, worin die detektierten Drehwinkelgeschwindigkeiten der entsprechenden Reifen (W1, W2, W3, W4) in Abhängigkeit von der Fahrgeschwindigkeit des vierrädrigen Fahrzeugs korrigiert werden.

27. Reifendruckabfall-Detektionsverfahren nach einem der Ansprüche 17 bis 26, worin die detektierten Drehwinkelgeschwindigkeiten der entsprechenden Reifen (W1, W2, W3, W4) korrigiert werden, wenn das vierrädrige Fahrzeug eine Kurve fährt.

28. Reifendruckabfall-Detektionsverfahren nach einem der Ansprüche 17 bis 27, worin das Ausmaß der Änderung in dem Rollradius aufgrund des Effekts der Fahrgeschwindigkeit des Fahrzeugs auf einer vorbestimmten Funktion basiert, welche den Zusammenhang zwischen der Fahrgeschwindigkeit des Fahrzeugs und dem Ausmaß der Änderung in dem Rollradius darstellt, und worin die Drehwinkelgeschwindigkeiten der Reifen (W1, W2, W3, W4) auf der Basis des Ausmaßes der Änderung in dem Rollradius korrigiert werden.

29. Reifendruckabfall-Detektionsverfahren nach einem der Ansprüche 26 bis 28, worin der Korrekturschritt ein Speichern einer Tabelle umfaßt, welche den Zusammenhang zwischen der Fahrgeschwindigkeit des Fahrzeugs und dem Ausmaß der Änderung in dem Rollradius repräsentiert, wobei die gespeicherten Inhalte ausgelesen werden, um das Ausmaß der Änderung in dem Rollradius aufgrund des Effekts der Fahrgeschwindigkeit des Fahrzeugs zu ermitteln, um die Drehwinkelgeschwindigkeiten der entsprechenden Reifen (W1, W2, W3, W4) auf der Basis des gefundenen Ausmaßes der Änderung in dem Rollradius zu korrigieren.

30. Reifendruckabfall-Detektionsverfahren nach einem der Ansprüche 26 bis 29, worin festgestellt wird, daß das Fahrzeug eine Kurve fährt, wenn die Differenz oder das Verhältnis der Drehwinkelgeschwindigkeiten des linken und rechten Vorderreifens (W1, W2) und/oder die Differenz oder das Verhältnis der Drehwinkelgeschwindigkeiten des linken und rechten Hinterreifens (W3, W4) einen speziellen Wert überschreiten, um die Drehwinkelgeschwindigkeiten der Reifen (W1, W2, W3, W4) auf der Basis der Seitenbeschleunigung zu korrigieren, welche auf der Basis der Drehwinkelgeschwindigkeiten der Reifen (W1, W2, W3, W4) berechnet wurden.

31. Reifendruckabfall-Detektionsverfahren nach einem der Ansprüche 17 bis 30, weiters umfassend den Schritt einer Anzeige der Resultate der Beurteilung bzw. Feststellung.

32. Reifendruckabfall-Detektionsverfahren nach Anspruch 31, worin der Schritt einer Anzeige eine Anzeige des Reifens, dessen Luftdruck abfällt, durch Aufleuchten oder Blinken und Anzeige aller Reifen (W1, W2, W3, W4) durch Aufleuchten für eine vorbestimmte Zeitdauer, nachdem ein Zündschalter des Fahrzeugs eingeschaltet wurde, umfaßt.

## Revendications

1. Dispositif de détection d'une baisse de pression dans un pneumatique pour véhicule à quatre roues ayant quatre pneumatiques (W1, W2, W3, W4), comportant :

   des moyens émetteurs d'impulsions (1, 14) prévus respectivement pour lesdits quatre pneumatiques (W1, W2, W3, W4) pour émettre des impulsions proportionnelles à la rotation des pneumatiques respectifs (W1, W2, W3, W4) ;
   des moyens de comptage (23, 24, 25, 26, 27 ; 16 ; 28) reliés aux moyens émetteurs d'impulsions (1, 14) pour compter les impulsions appliquées à partir des moyens émetteurs d'impulsions (1, 14) dans les limites d'une période de mesure prédéterminée ;
   des moyens de mémorisation (26 ; 16 ; 28) mémorisant le moment où la dernière impulsion se produisant dans les limites de chacune des périodes de mesure est appliquée aux moyens de comptage (23, 24, 25, 26, 27 ; 16 ; 28) ;
   des moyens (24, 25, 26, 27 ; 16 ; 28) pour calculer le temps écoulé depuis le moment où la dernière impulsion de la période de mesure précédente est appliquée jusqu'au moment où la dernière impulsion de la période de mesure actuelle est appliquée, qui sont mémorisés dans les moyens de mémorisation (26 ; 16 ; 28), en tant que temps de référence de la période de mesure actuelle ;
   des moyens (24, 25, 26, 27 ; 16 ; 28) pour diviser le nombre d'impulsions appliquées dans les limites de la période de mesure actuelle et qui sont comptées par lesdits moyens de comptage (23, 24, 25, 26, 27 ; 16 ; 28) par ledit temps de référence, pour calculer le nombre d'impulsions par unité de temps ;
   des moyens (24, 25, 26, 27; 16; 28) pour calculer les vitesses angulaires de rotation des pneumatiques respectifs (W1, W2, W3, W4) sur la base dudit nombre calculé d'impulsions par unité de temps ; et
   des moyens de détermination d'une pression réduite d'un pneumatique (23, 24, 25, 26, 27; 16; 28) pour comparer les vitesses angulaires de rotation calculées des quatre pneumatiques (W1, W2, W3, W4) afin déterminer si la pression pneumatique d'un pneumatique (W1, W2, W3, W4) baisse ou non.

2. Dispositif de détection d'une baisse de pression dans un pneumatique selon la revendication 1, dans lequel lesdits moyens de comptage (23, 24, 25, 26, 27; 16; 28) comptent les impulsions appliquées à partir des moyens émetteurs d'impulsions (1, 14) sur la base des flancs avant ou des flancs arrière des impulsions.

3. Dispositif de détection d'une baisse de pression dans un pneumatique selon la revendication 1 ou 2, dans lequel

EP 0 656 268 B1

lesdits moyens de détermination d'une pression réduite d'un pneumatique (23, 24, 25, 26, 27; 16; 28) déterminent le rapport de la somme des vitesses angulaires de rotation d'une paire de pneumatiques (W1, W4 ; W2, W3) sur une ligne diagonale à la somme des vitesses angulaires de rotation de l'autre paire de pneumatiques (W1, W4 ; W2, W3) sur la base des vitesses angulaires de rotation calculées des quatre pneumatiques (W1, W2, W3, W4), afin de déterminer si la pression pneumatique d'un pneumatique (W1, W2, W3, W4) baisse ou non selon que le rapport trouvé est supérieur ou inférieur à une valeur prédéterminée.

4. Dispositif de détection d'une baisse de pression dans un pneumatique selon l'une quelconque des revendications 1 à 3, comportant, en outre, des moyens de détermination (23, 24, 25, 26, 27; 16; 28) pour déterminer si ledit véhicule à quatre roues se trouve ou non dans un état prédéterminé qui n'est pas approprié à la détection d'une baisse de pression dans un pneumatique ;

   lesdits moyens de détermination d'une pression réduite d'un pneumatique (23, 24, 25, 26, 27; 16; 28) n'exécutant pas une opération en vue de la détection lorsque lesdits moyens de détermination (23, 24, 25, 26, 27; 16; 28) déterminent que le véhicule à quatre roues se trouve dans l'état qui n'est pas approprié à la détection.

5. Dispositif de détection d'une baisse de pression dans un pneumatique selon la revendication 4, dans lequel ledit état prédéterminé qui n'est pas approprié à la détection de la baisse de pression dans un pneumatique comprend :

   (1) un cas dans lequel le véhicule à quatre roues roule à une vitesse réduite ne dépassant pas une vitesse prédéterminée ;
   (2) un cas dans lequel le véhicule à quatre roues est en train d'être accéléré ou décéléré à une vitesse non inférieure à une vitesse prédéterminée ;
   (3) un cas dans lequel le véhicule à quatre roues est en train de prendre un virage sur une route présentant un rayon inférieur à un rayon de courbure prédéterminé ;
   (4) un cas dans lequel une accélération latérale non inférieure à une valeur prédéterminée est produite dans le véhicule à quatre roues.
   (5) un cas dans lequel le véhicule à quatre roues passe d'un état de déplacement en ligne droite a un etat de prise de virage, ou d'un état de prise de virage à un état de déplacement en ligne droite, et la vitesse de modification de l'accélération latérale produite par le passage dépasse une valeur spécifiée prédéterminée ; ou
   (6) un cas dans lequel un dispositif particulier prévu pour le véhicule à quatre roues est en train d'être actionné.

6. Dispositif de détection d'une baisse de pression dans un pneumatique selon l'une quelconque des revendications 1 à 5, dans lequel lesdits moyens de calcul de vitesse angulaire de rotation (23, 24, 25, 26, 27; 16; 28) comportent des moyens de correction (24, 25, 26, 27; 16; 28) pour imposer à la vitesse angulaire de rotation de chacun des pneumatiques (W1, W2, W3, W4) détectée par les moyens de détection de vitesse angulaire de rotation (23, 24, 25, 26, 27 ; 16 ; 28) une correction appropriée sur la base du comportement dudit véhicule à quatre roues.

7. Dispositif de détection d'une baisse de pression dans un pneumatique selon l'une quelconque des revendications 1 à 6, dans lequel lesdits moyens émetteurs d'impulsions (1, 14) et lesdits moyens de comptage (23, 24, 25, 26, 27; 16; 28) sont utilisés, lorsque le véhicule est doté d'un système anti-blocage des freins (2, 3, 4, 5, 6), avec des moyens émetteurs d'impulsions (1, 14) et des moyens de comptage (16 ; 28) pour le système de freinage antibloqueur (2, 3, 4, 5, 6).

8. Dispositif de détection d'une baisse de pression dans un pneumatique selon l'une quelconque des revendications 1 à 7, dans lequel :

   ledit véhicule à quatre roues a un système de freinage antibloqueur (2, 3, 4, 5, 6) ; et
   lesdits moyens de mémorisation (24, 26, 27 ; 16 ; 28), lesdits moyens de calcul (24, 25, 26, 27; 16; 28) et lesdits moyens de détermination d'une pression réduite d'un pneumatique (23, 24, 25, 26, 27; 16; 28) sont réalisés en utilisant une partie d'un micro-ordinateur (16) peur le système de freinage antibloqueur (2, 3, 4, 5, 6).

9. Dispositif de détection d'une baisse de pression dans un pneumatique selon la revendication 7 ou 8, dans lequel lesdits moyens émetteurs d'impulsions (1, 14) et lesdits moyens de comptage (23, 24, 25, 26, 27; 16; 28) sont utilisés avec des moyens émetteurs d'impulsions (1, 14) et des moyens de comptage (16 ; 28) pour le système de freinage antibloqueur (2, 3, 4, 5, 6).

10. Dispositif de détection d'une baisse de pression dans un pneumatique selon l'une quelconque des revendications 6 à 9, dans lequel lesdits moyens de correction (23, 24, 25, 26, 27; 16; 28) corrigent les vitesses angulaires de rotation détectées des pneumatiques respectifs (W1, W2, W3, W4) en fonction de la vitesse de déplacement du véhicule à quatre roues.

11. Dispositif de détection d'une baisse de pression dans un pneumatique selon l'une quelconque des revendications 6 à 10, dans lequel lesdits moyens de correction (23, 24, 25, 26, 27; 16; 28) corrigent les vitesses angulaires de rotation détectées des pneumatiques respectifs (W1, W2, W3, W4) lorsque le véhicule à quatre roues est en train de prendre un virage.

12. Dispositif de détection d'une baisse de pression dans un pneumatique selon l'une quelconque des revendications 6 à 11, dans lequel lesdits moyens de correction (23, 24, 25, 26, 27; 16; 28) déterminent la valeur de la variation du rayon de roulement due à l'effet de la vitesse de déplacement du véhicule sur la base d'une fonction prédéterminée représentant la relation entre la vitesse de déplacement du véhicule et la valeur de la variation du rayon de roulement, pour corriger les vitesses angulaires de rotation des pneumatiques (W1, W2, W3, W4) sur la base de la valeur déterminée de la variation du rayon de roulement.

13. Dispositif de détection d'une baisse de pression dans un pneumatique selon l'une quelconque des revendications 6 à 12, dans lequel lesdits moyens de correction (23, 24, 25, 26, 27; 16; 28) comportent des moyens de mémorisation (25, 26, 27 ; 16 ; 28) pour mémoriser une table représentant la relation entre la vitesse de déplacement du véhicule et la valeur de la variation du rayon de roulement, le contenu mémorisé dans les moyens de mémorisation (25, 26, 27 ; 16 ; 28) étant extrait pour déterminer la valeur de la variation du rayon de roulement due à l'effet de la vitesse de déplacement du véhicule, afin de corriger les vitesses angulaires de rotation des pneumatiques respectifs (W1, W2, W3, W4) sur la base de la valeur déterminée de la variation du rayon de roulement.

14. Dispositif de détection d'une baisse de pression dans un pneumatique selon l'une quelconque des revendications 6 à 13, dans lequel lesdits moyens de correction (23, 24, 25, 26, 27; 16; 28) déterminent que le véhicule est en train de prendre un virage lorsque la différence ou le rapport des vitesses angulaires de rotation des pneumatiques avant gauche et avant droit (W1, W2) et/ou la différence ou le rapport des vitesses angulaires de rotation des pneumatiques arrière gauche et arrière droite (W2, W3) dépasse(nt) une valeur spécifiée, pour corriger les vitesses angulaires de rotation des pneumatiques (W1, W2, W3, W4) sur la base de l'accélération latérale calculée sur la base des vitesses angulaires de rotation des pneumatiques (W1, W2, W3, W4).

15. Dispositif de détection d'une baisse de pression dans un pneumatique selon l'une quelconque des revendications 1 à 14, comportant, en outre, des moyens d'affichage (22) pour afficher les résultats de la détermination faite par lesdits moyens de détermination d'une pression réduite d'un pneumatique (23, 24, 25, 26, 27; 16; 28).

16. Dispositif de détection d'une baisse de pression dans un pneumatique selon l'une quelconque des revendications 1 à 15, dans lequel les moyens d'affichage (22) comportent des éléments d'affichage correspondant aux quatre pneumatiques (W1, W2, W3, W4), l'élément d'affichage correspondant au pneumatique dont la pression pneumatique baisse s'allumant ou clignotant, et tous les éléments d'affichage s'allumant pendant une période de temps prédéterminée après que le contact d'allumage du véhicule a été mis .

17. Procédé de détection d'une baisse de pression dans un pneumatique pour véhicule à quatre roues ayant quatre pneumatiques (W1, W2, W3, W4), comportant les étapes consistant :

à émettre des impulsions proportionnelles à la rotation des pneumatiques respectifs (W1, W2, W3, W4) ;
à compter les impulsions se produisant dans les limites d'une période de mesure prédéterminée ;
à mémoriser le moment où la dernière impulsion se produisant dans les limites de chacune des périodes de mesure est comptée ;
à calculer le temps écoulé depuis le moment où la dernière impulsion de la période de mesure précédente est comptée jusqu'au moment où la dernière impulsion de la période de mesure actuelle est comptée, temps qui est mémorisé en tant que temps de référence de la période de mesure actuelle ;
à diviser le nombre d'impulsions comptées dans les limites de la période de mesure actuelle par ledit temps de référence, pour calculer le nombre d'impulsions par unité de temps ;
à calculer les vitesses angulaires de rotation des pneumatiques respectifs (W1, W2, W3, W4) sur la base dudit nombre calculé d'impulsions par unité de temps ; et
à comparer les vitesses angulaires de rotation calculées des quatre pneumatiques (W1, W2, W3, W4) afin de déterminer si la pression pneumatique d'un pneumatique (W1, W2, W3, W4) baisse ou non.

**18.** Procédé de détection d'une baisse de pression dans un pneumatique selon la revendication 17, dans lequel ledit comptage est basé sur les flancs montants ou descendants des impulsions.

**19.** Procédé de détection d'une baisse de pression dans un pneumatique selon la revendication 17 ou 18, dans lequel ladite comparaison détermine le rapport de la somme des vitesses angulaires de rotation d'une paire de pneumatiques (W1, W4 ; W2, W3) sur une ligne diagonale à la somme des vitesses angulaires de rotation de l'autre paire de pneumatiques (W1, W4 ; W2, W3) sur la base des vitesses angulaires de rotation calculées des quatre pneumatiques (W1, W2, W3, W4), afin de déterminer si la pression pneumatique d'un pneumatique baisse ou non selon que le rapport déterminé est supérieur ou inférieur à une valeur prédéterminée.

**20.** Procédé de détection d'une baisse de pression dans un pneumatique selon l'une quelconque des revendications 17 à 19, comportant, en outre, l'étape consistant à déterminer si ledit véhicule à quatre roues se trouve dans un état prédéterminé qui n'est pas approprié à la détection d'une baisse de pression dans un pneumatique ;

ladite comparaison n'étant pas effectuée lorsqu'il est déterminé que le véhicule à quatre roues se trouve dans l'état qui n'est pas approprié à la détection.

**21.** Procédé de détection d'une baisse de pression dans un pneumatique selon la revendication 20, dans lequel ledit état prédéterminé qui n'est pas approprié à la détection de la baisse de pression dans un pneumatique comprend :

(1) un cas dans lequel le véhicule à quatre roues roule à une vitesse réduite ne dépassant pas une vitesse prédéterminée ;
(2) un cas dans lequel le véhicule à quatre roues est en train d'être accéléré ou décéléré à une vitesse non inférieure à une vitesse prédéterminée ;
(3) un cas dans lequel le véhicule à quatre roues est en train de prendre un virage sur une route présentant un rayon inférieur à un rayon de courbure prédéterminé ;
(4) un cas dans lequel une accélération latérale non inférieure à une valeur prédéterminée est produite dans le véhicule à quatre roues.
(5) un cas dans lequel le véhicule à quatre roues passe d'un état de déplacement linéaire à un état de prise de virage, ou d'un état de prise de virage à un état de déplacement linéaire, et la vitesse de modification de la gravité transversale produite par le passage dépasse une valeur spécifiée prédéterminée ; ou
(6) un cas dans lequel un dispositif particulier prévu pour le véhicule à quatre roues est en train d'être actionné.

**22.** Procédé de détection d'une baisse de pression dans un pneumatique selon l'une quelconque des revendications 17 à 21, dans lequel ladite étape de calcul de la vitesse angulaire de rotation comporte l'étape consistant à imposer à la vitesse angulaire de rotation de chacun des pneumatiques (W1, W2, W3, W4) une correction appropriée sur la base du comportement dudit véhicule à quatre roues.

**23.** Procédé de détection d'une baisse de pression dans un pneumatique selon l'une quelconque des revendications 17 à 22, dans lequel lesdites étapes d'émission d'impulsions et de comptage sont utilisées, lorsque le véhicule est doté d'un système de freinage antibloqueur (2, 3, 4, 5, 6), avec des moyens émetteurs d'impulsions (1, 14) et des moyens de comptage (16 ; 28) pour le système de freinage antibloqueur (2, 3, 4, 5, 6).

**24.** Procédé de détection d'une baisse de pression dans un pneumatique selon l'une quelconque des revendications 17 à 23, dans lequel :

ledit véhicule à quatre roues a un système de freinage antibloqueur (2, 3, 4, 5, 6) ; et
lesdites étapes de mémorisation, de calcul, de comparaison et de détermination sont réalisées en utilisant une partie d'un micro-ordinateur (16) pour le système de freinage antibloqueur (2, 3, 4, 5, 6).

**25.** Procédé de détection d'une baisse de pression dans un pneumatique selon la revendication 23 ou 24, dans lequel lesdites étapes d'émission d'impulsions et de comptage sont exécutées par ou pour le système de freinage antibloqueur (2, 3, 4, 5, 6).

**26.** Procédé de détection d'une baisse de pression dans un pneumatique selon l'une quelconque des revendications 17 à 25, dans lequel les vitesses angulaires de rotation des pneumatiques respectifs (W1, W2, W3, W4) sont corrigées en fonction de la vitesse de déplacement du véhicule à quatre roues.

**27.** Procédé de détection d'une baisse de pression dans un pneumatique selon l'une quelconque des revendications 17 à 26, dans lequel les vitesses angulaires de rotation détectées des pneumatiques respectifs (W1, W2, W3, W4) sont corrigées lorsque le véhicule à quatre roues est en train de prendre un virage.

**28.** Procédé de détection d'une baisse de pression dans un pneumatique selon l'une quelconque des revendications 17 à 27, dans lequel la valeur de la variation du rayon de roulement due à l'effet de la vitesse de déplacement du véhicule est basée sur une fonction prédéterminée représentant la relation entre la vitesse de déplacement du véhicule et la valeur de la variation du rayon de roulement, et les vitesses angulaires de rotation des pneumatiques (W1, W2, W3, W4) sont corrigées sur la base de la valeur de la variation du rayon de roulement.

**29.** Procédé de détection d'une baisse de pression dans un pneumatique selon l'une quelconque des revendications 26 à 28, dans lequel ladite étape de correction comprend la mémorisation d'un tableau représentant la relation entre la vitesse de déplacement du véhicule et la valeur de la variation du rayon de roulement, le contenu mémorisé étant extrait pour déterminer la valeur de la variation du rayon de roulement due à l'effet de la vitesse de déplacement du véhicule, afin de corriger les vitesses angulaires de rotation des pneumatiques respectifs (W1, W2, W3, W4) sur la base de la valeur déterminée de la variation du rayon de roulement.

**30.** Procédé de détection d'une baisse de pression dans un pneumatique selon l'une quelconque des revendications 26 à 29, dans lequel il est déterminé que le véhicule prend un virage quand la différence ou le rapport des vitesses angulaires de rotation des pneumatiques avant gauche et avant droit (W1, W2) et/ou la différence ou le rapport des vitesses angulaires de rotation des pneumatiques arrière gauche et arrière droit (W3, W4) dépasse(nt) une valeur déterminée, pour corriger les vitesses angulaires de rotation des pneumatiques (W1, W2, W3, W4) sur la base de l'accélération latérale calculée à partir des vitesses angulaires de rotation des pneumatiques (W1, W2, W3, W4).

**31.** Procédé de détection d'une baisse de pression dans un pneumatique selon l'une quelconque des revendications 17 à 30, comportant, en outre, l'étape consistant à afficher les résultats de la détermination.

**32.** Procédé de détection d'une baisse de pression dans un pneumatique selon la revendication 31, dans lequel ladite étape d'affichage comporte la désignation du pneumatique dont la pression pneumatique baisse en s'allumant ou en clignotant, et à afficher tous les pneumatiques (W1, W2, W3, W4) en s'allumant pendant une période de temps prédéterminée après la mise du contact d'allumage du véhicule.

FIG. 1

F I G. 2

F I G. 3

F I G. 4

F I G. 5

F I G. 6

F I G. 7(a)

F I G. 7(b)

F I G. 7(c)

F I G. 8(a)

COUNTING PROCESSING
OF WHEEL SPEED PULSES

S1 ARISING
EDGE OF
PULSES
? → NO

YES

S2 TIME MEMORY
←TIME WHEN ARISING
EDGE IS INPUTTED

S3 PULSE COUNTER
← + 1

RETURN

F I G. 8(b)

CALCULATION PROCESSING
OF ROTATIONAL ANGULAR
VELOCITY

S11 TIMER = $\triangle$ t ? → NO

YES

S12 RESET TIMER

S13 TIME STORED IN R1
→STORE IN R2

S14 TIME STORED IN TIME
MEMORY
→STORE IN R1

S15 VALUE OF PULSE COUNTER
→STORE IN R3
CLEAR PULSE COUNTER

S16 READ OUT DATA FROM
R1, R2, R3,
CALCULATE $\omega$

$$\omega = k1 \frac{x}{t_x - t_{x-1}}$$

RETURN

# F I G. 9

START OF
MEASUREMENT

$N=1$   $N=2$   $N=n\cdot No$   $N=n\cdot No+1$

t1   t2

F I G. 10

START

S21 — ARISING EDGE ? — NO

YES

S22 — TIME MEMORY 1 ←TIME t1 WHEN ARISING EDGE IS INPUTTED

S23 — PULSE COUNTER ← +1

S24 — ARISING EDGE ? — NO

YES

S25 — PULSE COUNTER ← +1

S26 — COUNTER =NO·n? — NO

YES

S27 — ARISING EDGE ? — NO

YES

S28 — TIME MEMORY 2 ←TIME t2 WHEN ARISING EDGE IS INPUTTED

S29 — CLEAR PULSE COUNTER

S30 — CALCULATE ROTATIONAL ANGULAR VELOCITY $\omega$

$$\omega = k2 \frac{n}{t2 - t1}$$

RETURN

FIG. 11

W1    W2

W3    W4

FIG. 12

CENTER OF GRAVITY    LATERAL ACCELARATION G

ROLL CENTER

W1,W3    W2,W4

## F I G. 13

```
        ┌─────────────────────┐
        │   INITIALIZATION     │
        │     PROCESSING       │
        └─────────────────────┘
                   │
                   │←─────────────────┐
                   ▼                  │
S41          ◇─────────────◇          │
            ╱  SWITCH IS    ╲   NO    │
           ╱  TURNED ON      ╲────────┘
            ╲      ?         ╱
             ◇─────────────◇
                   │ YES
                   ▼
S42        ┌─────────────────┐
           │    WRITE FLAG    │
           └─────────────────┘
                   │
                   ▼
S43        ┌─────────────────┐
           │  CAUSE DISPLAY   │
           │  ELEMENTS TO     │
           │  FLICKER         │
           └─────────────────┘
                   │
                   │←─────────────────┐
                   ▼                  │
S44      ◇───────────────────◇        │
        ╱     VEHICLE IS       ╲  NO  │
       ╱ TRAVELING LINEARLY AND ╲─────┘
        ╲  AT CONSTANT SPEED    ╱
         ╲        ?            ╱
          ◇───────────────────◇
                   │ YES
                   ▼
S45    ┌───────────────────────────┐
       │ DETECT F1, F2, F3, F4      │
       │ UTILIZING F1 AS            │
       │ REFERENCE VALUE            │
       │ CALCULATE,                 │
       │ C2=F2/F1,  C3=F3/F1        │
       │ C4=F4/F1                   │
       └───────────────────────────┘
                   │
                   ▼
S46        ┌─────────────────┐
           │     STORE        │
           │   C2, C3, C4     │
           └─────────────────┘
                   │
                   ▼
S47        ┌─────────────────┐
           │   ERASE FLAG     │
           └─────────────────┘
                   │
                   ▼
S48        ┌─────────────────┐
           │  PUT OUT DISPLAY │
           │  ELEMENTS        │
           └─────────────────┘
                   │
                   ▼
           ┌─────────────────┐
           │      END         │
           └─────────────────┘
```

Detect $F_1, F_2, F_3, F_4$ utilizing $F_1$ as reference value. Calculate, $C_2 = F_2/F_1$, $C_3 = F_3/F_1$, $C_4 = F_4/F_1$.

## F I G. 14

```
        ┌─────────────────┐
        │    JUDGMENT     │
        │   PROCESSING    │
        └────────┬────────┘
                 │
S51     ┌────────▼────────┐
        │   READ WHEEL    │
        │  SPEED PULSES   │
        └────────┬────────┘
                 │
S52          ◇───▼───◇
        ◇   READING    ◇ ──YES──┐
        ◇ INHIBITING        ◇    │
        ◇ CONDITIONS  ◇          │
                ?                │
              │ NO               │
S53   ┌───────▼──────────┐       │
      │ DETECT ROTATIONAL│       │
      │ ANGULAR VELOCITY │       │
      │   OF EACH TIRE   │       │
      └───────┬──────────┘       │
              │                  │
S54        ◇──▼──◇               │
        ◇ DETECTION ◇ ──YES──────┤
        ◇ INHIBITING ◇           │
        ◇ CONDITIONS ◇           │
              ?                  │
            │ NO                 │
S55      ◇──▼──◇                 │
      ◇ CORRECTION ◇ ──NO──┐     │
      ◇ IS REQUIRED ◇      │     │
            ?              │     │
          │ YES           │     │
S56 ┌─────▼──────┐         │     │
    │ CORRECTION │         │     │
    └─────┬──────┘         │     │
          ◄────────────────┘     │
S57 ┌─────▼──────┐               │
    │  JUDGMENT  │               │
    └─────┬──────┘               │
          ◄─────────────────────┘
    ┌─────▼──────┐
    │    END     │
    └────────────┘
```

F I G. 15

EP 0 656 268 B1

EP 0 656 268 B1

F I G. 16

F I G. 17

# F I G. 18

SLIP ANGLE
  0.13% / 1 deg

CAMBER ANGLE
  LITTLE CHANGE

ROLLING RADIUS (mm)

185/70R13
2.0kg/cm²
400kg
40km/h

289

288

287 — ○ SLIP ANGLE

286 — □ CAMBER ANGLE

−5 −4 −3 −2 −1 0 1 2 3 4 5

ANGLE (deg)

EP 0 656 268 B1

FIG. 19

F I G. 20

0.19% / 6mm

185/70R13
2.0kg/cm²
400kg
80km/h

ROLLING RADIUS (mm)

AMOUNT OF WEAR (mm)